# EUROPÄISCHE PATENTSCHRIFT

(11) **EP 3 659 079 B1**
(45) Veröffentlichungstag und Bekanntmachung des Hinweises auf die Patenterteilung: **29.01.2025**
(21) Anmeldenummer: 17751292.8
(22) Anmeldetag: 24.07.2017
(51) Int. Cl.: G06Q 10/08, G08G 5/00

(54) **TRANSPORTSYSTEM ZUR PASSAGIERBEFÖRDERUNG UND VERFAHREN ZUM BETREIBEN EINES TRANSPORTSYSTEMS ZUR PASSAGIERBEFÖRDERUNG**
TRANSPORT SYSTEM FOR PASSENGER TRANSPORTATION AND METHOD FOR OPERATING A TRANSPORT SYSTEM FOR PASSENGER TRANSPORTATION
SYSTÈME DE TRANSPORT POUR LE TRANSPORT DE PASSAGERS ET PROCÉDÉ PERMETTANT DE FAIRE FONCTIONNER UN SYSTÈME DE TRANSPORT POUR LE TRANSPORT DE PASSAGERS

(43) Veröffentlichungstag der Anmeldung: 03.06.2020
(73) Patentinhaber: Volocopter GmbH, 76646 Bruchsal (DE)
(72) Erfinder: ZOSEL, Alexander, 76646 Bruchsal (DE); REUTER, Florian, 69221 Dossenheim (DE)
(74) Vertreter: Bauer, Marcus
(86) Internationale Anmeldenummer: PCT/EP2017/068682
(87) Internationale Veröffentlichungsnummer: WO 2019/020168

(56) Entgegenhaltungen:
- US-A1- 2014 032 034
- US-A1- 2015 339 930
- US-A1- 2016 260 331
- US-A1- 2016 364 989
- US-A1- 2017 197 710
- US-B1- 9 527 605
- US-B1- 9 678 507

## Beschreibung

Die Erfindung betrifft ein Verfahren zum Betreiben eines Transportsystems zur Passagierbeförderung gemäß dem Oberbegriff des Anspruchs 1 sowie ein Transportsystem zur Passagierbeförderung gemäß dem Oberbegriff des Anspruchs 10.

Die Anmelderin ist Pionierin auf dem Gebiet der bemannten Luftfahrt mit elektrisch angetriebenen Multicoptern. Hierbei handelt es sich um senkrecht startende und landende Fluggeräte, die eine Vielzahl von elektrisch angetriebenen Rotoren aufweist und besonders einfach und sicher zu fliegen sind. Auch ein automatisierter Flugbetrieb (ohne Pilot) ist problemlos möglich. Derartige Fluggeräte haben das Potenzial, gerade den innerstädtischen Verkehr in urbanen Ballungszentren in Zukunft zu revolutionieren und einem drohenden Verkehrskollaps entgegenzuwirken.

Nachdem die Anmelderin erste Fluggeräte der genannten Art zur Serienreife entwickelt hat, stellt sich nun die Aufgabe, die auch dieser Erfindung zugrunde liegt, die vorbekannten Transportsysteme zur Passagierbeförderung, insbesondere im innerstädtischen Verkehr, zu verbessern und eine Erhöhung der Transportkapazität für Passagiere, insbesondere im innerstädtischen Verkehr, zu ermöglichen.

Die US 2017/0197710 A1 offenbart ein On-Demand Transportsystem für Passagiere sowie ein Verfahren zur Steuerung und Überwachung eines solchen Transportsystems. Das Transportsystem umfasst hierbei ein oder mehrere senkrecht startende und autonom gesteuerte Fluggeräte, welche an einer Mehrzahl von Abfertigungseinrichtungen starten und landen können und deren Flugrouten durch ein Steuerungssystem disponiert werden. Weiter umfasst das System ein oder mehrere Hangars zur Wartung der Fluggeräte, insbesondere zum Aufladen der Batterien, und zum Abstellen von nicht benötigten Fluggeräten.

US 2015/339930 A1 betrifft DYNAMIC AIRCRAFT THREAT CONTROLLER MANAGER APPARATUSES, METHODS AND SYSTEMS ("DATCM"), die Flugprofilinformationen, Gelände-, Wetter-/Atmosphärendaten und Flugparameterdaten über DATCM-Komponenten in umfassende, für die Gefahrenvermeidung optimierte Flugpläne umwandeln.

US 2014/032034 A1 bezieht sich auf ein Steuerungssystem für autonome Fluggeräte, welche Güter und/oder Personen zwischen Bodenstationen transportieren. Die Fluggeräte bestimmen selbst die Flugrouten basierend auf Transportaufträgen eines Logistiksystems. Die Fluggeräte sind mit Sensoren ausgestattet, um Umweltbedingungen zur Unterstützung der Landungsvorgänge zu erfassen.

US 9 527 605 B1 offenbart ein System bestehend aus Dockingstationen und Fluggeräten, wobei die Dockingstationen dazu verwendet werden, um die Fluggeräte aufzuladen und sie anlassbezogen bei flugbeeinträchtigenden Wetterbedingungen aufzunehmen. Im Falle einer Notsituation bestimmt eine zentrale Steuereinheit einen geeignete Dockingstation für eine Notlandung.

US 2016/364989 A1 bezieht sich auf ein System zur Unterstützung von unbemannten Fluggeräten bei Transport-, Überwachung- und/oder Datenerfassungstätigkeiten. Das System umfasst mobile Basisstationen, die als Lande- und Aufladeplattformen für die Fluggeräte verwendet werden, sowie eine zentrale Steuerungseinrichtung für die Ermittlung von Flugplänen.

US 9 678 507 B1 offenbart die Überwachung eines Gebietes durch unbemannte Fluggeräte, die sich jeweils von einer Dockingstation zu einer anderen Dockingstation bewegen, wobei die Dockingstationen an vordefinierten Plätzen der Region angeordnet sind. Jede Dockingstation hat eine Aufnahmekapazität für die Fluggeräte und falls diese erreicht wird, werden die Fluggeräte entnommen.

US 2016/260331 A1 bezieht sich auf ein Flugkontrollsystem, welches aktuelle und prognostizierte Wetterdaten und Flugdaten von unbemannten Fluggeräten analysiert und feststellt, ob ein Fluggerät seine aktuelle Flugroute fortsetzen kann. Im Falle eines zu hohen Risikos wird ein Fluggerät durch das Kontrollsystem auf einer vorgegebenen Flugroute zu einer Basisstation gesteuert, und das Kontrollsystem verhindert ein Starten des Fluggerätes von einer Basisstation.

Insbesondere dann, wenn vorhandene Transportsysteme zur Passagierbeförderung wie beispielsweise Bus- oder Bahnlinien nicht mehr genug Förderkapazität bieten oder eine schnellere Beförderung der Passagiere wünschenswert ist, sind bisher kostenintensive Erweiterungen der vorhandenen Systeme notwendig, welche typischerweise mit einem hohen Flächenbedarf einhergehen. Es besteht daher Bedarf an einem Transportsystem zur Passagierbeförderung, welches zusätzlich oder alternativ zu den vorbekannten Transportsystemen eingerichtet werden kann und ein hohes Maß an Betriebssicherheit bietet.

Diese Aufgabe löst die vorliegende Erfindung durch ein Verfahren zum Betreiben eines Transportsystems zur Passagierbeförderung gemäß Anspruch 1 sowie durch ein Transportsystem zur Passagierbeförderung gemäß Anspruch 10. Vorteilhafte Weiterbildungen der erfindungsgemäßen Idee finden sich in den jeweiligen Unteransprüchen.

Das erfindungsgemäße Verfahren ist bevorzugt zur Durchführung mittels eines erfindungsgemäßen Transportsystems ausgebildet, insbesondere einer vorteilhaften Weiterbildung hiervon. Das erfindungsgemäße Transportsystem ist bevorzugt zur Durchführung des erfindungsgemäßen Verfahrens ausgebildet, insbesondere einer vorteilhaften Weiterbildung.

Ein erfindungsgemäßes Verfahren zum Betreiben eines Transportsystems zur Passagierbeförderung beinhaltet ein Bereitstellen einer Mehrzahl von senkrecht startenden und senkrecht landenden Fluggeräten für Passagiere, ein Bereitstellen einer Mehrzahl von Abfertigungseinrichtungen für den Start und die Landung von Fluggeräten, wobei jede Abfertigungseinrichtung Parkplätze für eine Mehrzahl von Fluggeräten aufweist und ein Einrichten von Flugrouten zwischen den Abfertigungseinrichtungen, sodass jede Abfertigungseinrichtung mit zumindest einer weiteren Abfertigungseinrichtung über eine Flugroute verbunden wird. Auf den Flugrouten erfolgt zumindest in einer Flugrichtung ein kontinuierlicher Flugverkehr von Fluggeräten, mit automatisiertem Start, automatisiertem Flug entlang der Flugroute sowie automatisierter Landung. Weiterhin werden bei zumindest einer Teilmenge der Fluggeräte, bevorzugt bei allen Fluggeräten, Umgebungsbedingungen durch Sensoren, zumindest durch einen Branddetektor, Rauchdetektor, Winddetektor und/oder Niederschlagsdetektor, erfasst.

Durch ein Steuersystem des Transportsystems werden automatisiert aus den Sensordaten der Fluggeräte Umgebungsbedingungen abgeleitet und automatisiert solche Umgebungsbedingungen erkannt, bei welchen eine Unterbrechung des Flugbetriebs und das Auslösen eines Notfall-Modus notwendig ist.

Der Transport der Passagiere erfolgt bei dem erfindungsgemäßen Transportsystem zur Passagierbeförderung mittels automatisiert fliegender Fluggeräte. Im Vergleich zu einer Beförderung auf Schiene oder Straße besteht daher ein zusätzlicher Bedarf an Sicherheitsvorkehrungen, da eine Unterbrechung des Flugbetriebs durch "Anhalten" eines Fluggeräts, d. h. Verweilen eines Fluggeräts in einer ortsfesten Position, ständig Energie benötigt. Darüber hinaus können äußere Einflüsse, insbesondere starke Luftströmungen durch Sturm oder Sturmböen oder Beeinträchtigungen durch Niederschlag wie Hagel, starke Regen- oder Schneefälle, eine temporäre Unterbrechung des Flugverkehrs auf einer oder mehreren Flugrouten bedingen. Vorteilhafterweise weist das Steuerungssystem daher ein Flugüberwachungssystem auf, insbesondere wie weiter unten näher erläutert.

Im Rahmen des erfindungsgemäßen Verfahrens weist in einem Normalmodus zumindest eine Teilmenge der Abfertigungseinrichtungen, bevorzugt weisen alle Abfertigungseinrichtungen jeweils und ständig zumindest eine Notfall-Parkkapazität an freien Parkplätzen für Fluggeräte auf.

Die im Normalmodus stets vorhandene Notfall-Parkkapazität ermöglicht somit in Ausnahmesituationen, beispielsweise aufgrund der zuvor beschriebenen Umwelteinflüsse, die Unterbrechung des Flugbetriebs, indem zwar Fluggeräte an der Abfertigungseinrichtung landen, anschließend jedoch temporär nicht wieder starten, sondern auf einem freien Parkplatz geparkt werden und dort bevorzugt bis zum Beenden der Unterbrechung des Flugbetriebs verweilen.

Dabei entspricht die Notfall-Parkkapazität an freien Parkplätzen zumindest einer der folgenden Bedingungen:
a) Zwei mit einer Flugroute verbundene Abfertigungseinrichtungen weisen eine gemeinsame Notfall-Kapazität an freien Parkplätzen auf, welche zumindest der Anzahl der sich auf der Flugroute zwischen den beiden Abfertigungseinrichtungen fliegenden Fluggeräten entspricht. Vorteilhafterweise ist vorgenannte Bedingung für jedes Paar von mit einer Flugroute verbundenen Abfertigungseinrichtungen erfüllt.
   Hierdurch ist sichergestellt, dass alle Fluggeräte einer Flugroute an den durch diese Flugroute verbundenen Abfertigungseinrichtungen zur Unterbrechung des Flugbetriebs auf dieser Flugroute geparkt werden können.
b) Die Notfall-Parkkapazität einer Abfertigungseinrichtung entspricht der Anzahl aller auf einer Flugroute dieser Abfertigungseinrichtung gleichzeitig auf diese Abfertigungseinrichtung zufliegenden Fluggeräte.
   Hierdurch ist sichergestellt, dass sich zu jedem gegebenen Zeitpunkt alle sich "in der Luft" befindenden Fluggeräte auf der vorgegebenen Flugroute weiterbewegen können und an der vorgesehenen Ziel-Abfertigungseinrichtung geparkt werden können.
   Hierdurch ist in einfacher Weise sichergestellt, dass auch bei Anbinden einer Abfertigungseinrichtung mit mehreren weiteren Abfertigungseinrichtungen durch mehrere Flugrouten in einfacher Weise eine Unterbrechung des Flugverkehrs möglich ist: Zur Unterbrechung wird der Start weiterer Fluggeräte unterbunden. Die sich bereits auf einer Flugroute befindenden Fluggeräte beenden hingegen den vorgesehenen Flug und finden aufgrund der vorgenannten Bedingungen an der jeweiligen Ziel-Abfertigungseinrichtung eine Parkmöglichkeit.
c) Die Notfall-Parkkapazität entspricht der Summe aus der Hälfte der Anzahl aller auf einer Flugroute gleichzeitig auf dieser Abfertigungseinrichtung zufliegenden und der Hälfte der Anzahl aller auf einer Flugroute dieser Abfertigungseinrichtung gleichzeitig von dieser Abfertigungseinrichtung wegfliegenden Fluggeräte.
   Diese Bedingung ermöglicht einen schnelleren Abbruch des Flugbetriebs auf einer Flugroute, verglichen mit dem vorangehend beschriebenen Vorgehen zur Bedingung b): Das Einhalten der Bedingung c) ermöglicht, dass zum Abbruch des Flugbetriebs der weitere Start von Fluggeräten an der betreffenden Flugroute unterbunden wird und die sich bereits auf der Flugroute befindenden Fluggeräte jeweils zu der näheren der beiden mit dieser Flugroute verbundenen Abfertigungsstation fliegen. Hierdurch kann eine Halbierung der zum Abbruch des Flugbetriebs notwendigen Zeit erzielt werden, da im Extremfall bei dem zu Bedingungen b) beschriebenen Verfahren zumindest ein fliegendes Fluggerät die gesamte oder nahezu gesamte Strecke der Flugroute bis zum Erreichen einer Abfertigungsstation mit Parkplatz abfliegen muss, wohingegen bei dem zur Bedingung c) beschriebenen Vorgehen das Bewältigen maximal der Hälfte der Flugstrecke der betroffenen Flugroute genügt.
   Allerdings ist in diesem Modus ein Umkehren der Flugrichtung manches Fluggeräts erforderlich, sodass bei bidirektional ausgestalteten Fluglinien ein paralleler Flugbetrieb in gleicher Richtung bis zum vollständigen Unterbinden des Flugbetriebs notwendig ist. Bei dem zur Bedingung b) beschriebenen Vorgehen kann hingegen die im Normalmodus vorgegebene Flugrichtung beibehalten werden.

Erfindungsgemäß werden in dem Notfall-Modus für zumindest eine Teilmenge der Flugrouten, bevorzugt für alle Flugrouten, Startvorgänge von Fluggeräten an denen mit diesen Flugrouten verbundenen Abfertigungseinrichtungen gestoppt und die auf diesen Flugrouten fliegenden Fluggeräte landen auf einer der mit dieser Flugroute verbundenen Abfertigungseinrichtungen und werden auf einen freien Parkplatz dieser Abfertigungseinrichtung befördert. Hierbei ist es insbesondere vorteilhaft, dass ein automatisches Fördern des gelandeten Fluggeräts auf einen freien Parkplatz mittels einer Fördereinrichtung der Abfertigungseinrichtung erfolgt. Hierdurch muss kein Notfall-Personal zum Parken der Fluggeräte in dem Notfall-Modus vorgesehen werden und darüber hinaus kann ein effizienter und schneller Parkvorgang durch das Vorsehen einer entsprechend eingerichteten Fördereinrichtung gewährleistet werden. Eine solche Fördereinrichtung kann analog zu einem Regallagersystem ausgebildet sein. Insbesondere kann eine solche Fördereinrichtung eine oder mehrere der Komponenten Förderbänder, automatisierte Greifarme, automatisierte Transportplattformen für ein Fluggerät oder ein Fördersystem zum hängenden Transportieren von Fluggeräten aufweisen.

Bei Vorsehen einer Notfall-Parkkapazität gemäß vorgenannter Bedingungen b) landen bevorzugt die auf von den im Notfall-Modus betroffenen Flugrouten fliegenden Fluggeräte an der vorgesehenen Abfertigungseinrichtung in Flugrichtung.

Bei Vorsehen einer Notfall-Parkkapazität gemäß vorgenannter Bedingung c) landen die auf von den im Notfall-Modus betroffenen Flugrouten fliegenden Fluggeräte bevorzugt an der näherliegenden Abfertigungsstation dieser Flugroute.

Ein erfindungsgemäßes Transportsystem zur Passagierbeförderung weist auf: Eine Mehrzahl von senkrecht startenden und senkrecht landenden Fluggeräten für Passagiere, eine Mehrzahl von Abfertigungseinrichtungen für den Start und die Landung von Fluggeräten, wobei jede Abfertigungseinrichtung Parkplätze für eine Mehrzahl von Fluggeräten aufweist, ein Steuerungssystem zum automatisierten Start und der automatisierten Landung der Fluggeräte an den Abfertigungseinrichtungen und zum automatisierten Steuern der Fluggeräte entlang vorgegebener Flugrouten zwischen den Abfertigungseinrichtungen. Das Steuerungssystem ist für einen kontinuierlichen Flugverkehr der Fluggeräte auf den Flugrouten ausgebildet. Weiter weisen zumindest eine Teilmenge der Fluggeräte, bevorzugt alle Fluggeräte, Sensoren zum Erfassen von Umgebungsbedingungen auf, zumindest einen oder mehrere der Sensoren Branddetektor, Rauchdetektor, Winddetektor und/oder Niederschlagsdetektor. Das erfindungsgemäße Transportsystem umfasst außerdem noch die weiteren Merkmale aus Anspruch 10.

Erfindungsgemäß ist es demnach vorgesehen, die Transportkapazität für Passagiere durch das Befördern von Passagieren in Fluggeräten auf vorgegebenen Flugrouten zwischen Abfertigungseinrichtungen zu erhöhen. Das Bereitstellen eines Steuerungssystems zum automatisierten Start, dem automatisierten Flug entlang der Flugroute sowie der automatisierten Landung ermöglicht beliebigen Passagieren die Benutzung des Transportsystems, ohne dass besondere Kenntnisse oder eine spezielle Ausbildung oder Zulassung zum Fliegen eines Fluggerätsnotwendig ist. Der kontinuierliche Flugverkehr von Fluggeräten ermöglicht die Benutzung des Transportsystems durch eine Vielzahl von Passagieren, ohne dass eine Buchung oder Zuordnung eines bestimmten Fluggeräts zu dem Beförderungswunsch eines bestimmten Passagiers zwingend notwendig ist. Für die Passagiere ist somit die Benutzung des erfindungsgenäßen Transportsystems zur Passagierbeförderung in Grundsätzen mit der Benutzung eines durch Busse oder Bahnen gewährleisteten öffentlichen Nahverkehrsnetzes vergleichbar:
Die Bereitstellung der Mehrzahl von Abfertigungseinrichtungen ermöglicht den Zugang zum Transportsystem an einer Mehrzahl von Orten, wobei der Passagier eine gewünschte Zielabfertigungseinrichtung über eine oder mehrere hintereinander geschaltete Flugrouten durch automatisierten Flug in einem oder (durch Umsteigen an Abfertigungseinrichtungen) mehreren Fluggeräten erreicht.

Dieses Transportsystem benötigt im Vergleich zu vorbekannten Transportsystemen des öffentlichen Nahverkehrs erheblich weniger Fläche, da zwischen den Abfertigungseinrichtungen entlang einer Flugroute keine Infrastruktur wie etwa Bahnlinien erforderlich sind und auch keine vorhandene Infrastruktur wie etwa Straßen zusätzlich mit Verkehr beaufschlagt werden. Der Flächenbedarf ergibt sich aus lediglich der für die Abfertigungseinrichtungen notwendigen Fläche, wobei hier in einer vorteilhaften Ausführung vorhandene Bauwerke verwendet werden können oder multifunktionale Bauwerke vorgesehen werden können, sodass die benötigte Fläche nicht ausschließlich für die Abfertigungseinrichtung verwendet wird. Dies wird weiter unten näher erläutert.

Darüber hinaus bietet das erfindungsgemäße Transportsystem den Vorteil, dass eine schnelle Beförderung von Passagieren und somit auch das Erzielen einer hohen Beförderungsrate möglich ist. Dies wird dadurch begünstigt, dass eine Flugroute zwischen zwei Abfertigungseinrichtungen im optimalen Fall "Luftlinie", d. h. in kürzest möglicher Verbindung erfolgt. Typischerweise wird die Flugroute zwischen zwei Abfertigungseinrichtungen selbst bei Umgehen von etwaigen Hindernissen oder Flugverbotszonen kürzer sein als eine vergleichbare Verbindung im Straßen- oder Schienennetz einer vorhandenen Infrastruktur.

Weiterhin unterliegt der Flugverkehr der Fluggeräte auf den vorgegebenen Flugrouten nicht den Beschränkungen des Straßenverkehrs, sodass typischerweise eine erheblich höhere Durchschnittsgeschwindigkeit auf den Flugrouten verglichen mit der Durchschnittsgeschwindigkeit einer analogen Strecke im vorhandenen Straßenverkehrsnetz erzielt werden kann.

Die Kombination der Mehrzahl von Abfertigungseinrichtungen mit der Mehrzahl von Fluggeräten und dem Vorsehen eines kontinuierlichen, automatisierten Flugverkehrs auf den Flugrouten ermöglicht somit das Schaffen einer erheblichen Kapazitätserweiterung oder Alternativen zu vorbekannten Transportsystemen zur Passagierbeförderung.

Vorteilhafterweise wird für den kontinuierlichen Flugbetrieb für jede Abfertigungseinrichtung eine Regelstartfrequenz vorgegeben, mit welcher Fluggeräte in einem Normalmodus starten und/oder für jede Flugroute wird jeweils ein Regelabstand vorgegeben, welcher den Abstand eines Fluggeräts zu einem unmittelbar vorausfliegenden Fluggerät auf der jeweiligen Flugroute in einem Normalmodus wiedergibt.

Vorzugsweise fliegen alle Fluggeräte mit einer im einheitlichen Durchschnittsfluggeschwindigkeit. Insbesondere weisen bevorzugt alle Fluggeräte eine gleiche Reisegeschwindigkeit auf. Hierdurch ist in einfacher Weise ein kontinuierlicher Flugbetrieb, insbesondere das Einhalten einer konstanten Startfrequenz und/oder eines konstanten Abstandes zu dem unmittelbar vorausfliegenden Fluggerät möglich.

Ebenso liegt es im Rahmen der Erfindung, dass die Fluggeräte auf unterschiedlichen Flugrouten unterschiedliche Reisegeschwindigkeiten, d.h. die typische Fluggeschwindigkeit ausgenommen Start- und Landemanöver, aufweisen. So kann es zur Energieeinsparung vorteilhaft sein, auf kürzeren Flugrouten geringere Reisegeschwindigkeiten vorzugeben als auf längeren Flugrouten. Unterschiedliche Fluggeräte können auch unterschiedliche Reisegeschwindigkeiten aufweisen. Dies kann beispielsweise in unterschiedlichen Fluggerät-Typen begründet sein, da für einen gegebenen Fluggerät-Typ im Regelfall eine hinsichtlich der Energiebilanz und/oder Flugstabilität vorteilhafte Reisegeschwindigkeit gegeben ist. Bei Verwendung unterschiedlicher Fluggerät-Typen für die Fluggeräte kann es daher vorteilhaft sein, unterschiedliche Reisegeschwindigkeiten vorzugeben. Es kann somit vorteilhaft sein, eine konstante Landefrequenz am Zielpunkt einer Flugroute vorzugeben und die Startfrequenz individuellen Eigenschaften des jeweiligen Fluggerät-Typs, insbesondere der Reisegeschwindigkeit und/oder der für Start- und Landung benötigten Zeit, anzupassen.

Vorteilhafterweise ist daher ein für kontinuierlicher Flugbetrieb für zumindest eine, bevorzugt für alle Flugrouten ein oder mehrere Parameter aus der Liste
- Startfrequenz,
- Landefrequenz,
- Abstand zum unmittelbar vorausfliegenden Fluggerät,
- mittlerer Abstand auf der Flugroute zwischen den Fluggeräten,
- räumliche mittlere Fluggerätdichte auf der Flugroute,
- zeitliche mittlere Fluggerätdichte auf der Flugroute,
vorgegeben.

Hierdurch kann in einfacher Weise durch das Steuersystem der Normalmodus vorgegeben werden, d. h. der Modus, welcher abseits des Vorliegens von Störungen, Notfällen oder Sonderbedingungen eine gewünschte Förderkapazität sicherstellt. Die Förderkapazität auf einer Flugroute ergibt sich in einfacher Weise aus der Anzahl der pro Zeiteinheit auf dieser Flugroute fliegenden Fluggeräten multipliziert mit der Passagierkapazität, insbesondere Sitzplatzzahl der Fluggeräte.

Der Normalmodus ist somit der typische Betriebsmodus des Transportsystems, sofern keine Ausnahmen wie beispielsweise Notfallsituation oder zeitliche begrenzte Sonderregelungen wie etwa Flotternverlagerungen vorliegen, welche weiter unten näher erläutert werden.

Wie zuvor erwähnt, ist jede Abfertigungseinrichtung mit zumindest einer weiteren Abfertigungseinrichtung über eine Flugroute verbunden. Vorteilhafterweise ist zumindest eine Teilmenge der Flugrouten, bevorzugt alle Flugrouten, bidirektional ausgebildet. Dies bedeutet, dass auf einer Flugroute zwischen den beiden Abfertigungseinrichtungen, welche durch diese Flugroute verbunden werden, Fluggeräte in beiden Richtungen fliegen. Hierdurch ergibt sich der Vorteil, dass eine Passagierbeförderung in beiden Richtungen entlang der Flugroute ermöglicht wird. Ebenso liegt es im Rahmen der Erfindung, dass, insbesondere in Ausnahmefällen, auf einer Flugroute zwischen zwei Abfertigungseinrichtungen Fluggeräte lediglich in eine Richtung fliegen.

Bei den bidirektional ausgebildeten Flugrouten ist es vorteilhaft, dass in beiden Richtungen die gleiche Regelstartfrequenz und/oder der gleiche Regelabstand vorgegeben ist. Hierdurch ergibt sich der Vorteil, dass im Durchschnitt durch eine solche Flugroute die Anzahl an Fluggeräten an den beiden durch die Flugroute verbundenen Abfertigungseinrichtungen nicht verändert wird, da im zeitlichen Mittel auf dieser Flugroute die gleiche Anzahl von Fluggeräten auf eine Abfertigungseinheit zufliegt wie von dieser wegfliegt.

Das erfindungsgemäße Transportsystem ist bevorzugt als geschlossenes Netz ausgebildet, so dass die Abfertigungseinrichtungen ausschließlich untereinander über Flugrouten miteinander verbunden sind. Ebenso kann das Transportsystem als Bestandteil eines oder mehrerer über- und/oder nebengeordneter Netze ausgebildet sein, wobei zumindest eine der Abfertigungseinrichtungen und/oder zumindest eine der Flugrouten mit einer externen Flugroute oder externen Abfertigungseinrichtung eines externen Netzes verbunden ist. Ebenso können einzelne externe Abfertigungseinrichtungen über eine oder mehrere Flugrouten mit dem erfindungsgemäßen Transportnetz verbunden sein, insbesondere auf diese Weise in das erfindungsgemäße Transportnetz eingebettet sein.

Vorteilhafterweise ist das Steuerungssystem weiterhin derart ausgebildet, dass ein Notfall, der eine schnellstmögliche Landung der Fluggeräte einer oder mehrerer Flugrouten bedingt, manuell und/oder automatisiert vorgegeben werden kann. Bei solch einem Notfall werden die sich auf der betroffenen Flugroute befindenden Fluggeräte automatisiert am Boden (und nicht an einer Abfertigungseinrichtung) gelandet. Ein solcher Notfall kann beispielsweise vorliegen, wenn keine Landemöglichkeit an den mit der Flugroute verbundenen Abfertigungseinrichtungen besteht oder, wenn äußere Einflüsse zwingend eine schnellstmögliche Landung bedingen.

In einer vorteilhaften Ausführungsform des erfindungsgemäßen Verfahrens wird ein besonders energiesparender Transport der Passagiere erzielt, indem zumindest eine Teilmenge der Flugrouten, bevorzugt alle Flugrouten, einen Höhenunterschied zwischen höchstem und niedrigstem Punkt der Flugroute von weniger als 100 m, bevorzugt weniger als 50 m, insbesondere weniger als 30 m, aufweisen.

Dies ist in der Erkenntnis begründet, dass das Aufsteigen eines Fluggeräts einen erheblichen Energieeinsatz erfordert. Daher ist es vorteilhaft, die notwendige Strecke einer Flugroute mit möglichst geringem Aufsteigebedarf des Fluggeräts zu bewältigen. Eine solche energiesparend ausgebildete Flugroute kann dadurch begünstigt werden, dass die beiden Endpunkte der Flugroute nur einen geringen Höhenunterschied, insbesondere innerhalb der vorbeschriebenen Grenzen, aufweisen. Darüber hinaus ist es vorteilhaft, die Flugroute derart zu wählen, dass kein oder nur ein geringfügiges Überfliegen von dazwischenliegenden höheren Objekten oder Flugverbotszonen notwendig ist.

Sofern sich solche Flugverbotszonen oder zu überfliegende Objekte im Gebiet des Transportsystems befinden, ist es daher vorteilhaft, eine Flugroute unter seitlicher Umgehung solch eines Objekts oder einer Flugverbotszone zu wählen, sofern der Energiemehraufwand durch eine Verlängerung der Flugroute durch die Energieeinsparung aufgrund der geringeren Höhendifferenz überkompensiert wird.

Alternativ oder zusätzlich ist es daher vorteilhaft, dass zumindest eine Teilmenge der Abfertigungseinrichtungen des Transportsystems, bevorzugt alle Abfertigungseinrichtungen des Transportsystems, eine Start- und Landemöglichkeit für die Fluggeräte in einer Höhe größer 50 m, bevorzugt größer 75 m, insbesondere größer 100 m, über dem Boden aufweist. Hierdurch wird bereits durch die vorgegebene Start- und Landehöhe ein Überfliegen von niedrigeren Objekten oder Flugverbotszonen möglich, ohne dass ein Aufsteigen des Fluggeräts notwendig ist oder zumindest mit einem nur geringfügigen Aufsteigen des Fluggeräts. Insbesondere ist es daher vorteilhaft, dass die Abfertigungseinrichtungen in oder bevorzugt auf Hochhäusern angeordnet sind. Hierdurch wird auch die bereits erwähnte Mehrfachnutzung einer Fläche erzielt, sodass sich ein zusätzlicher Vorteil hinsichtlich des Flächenbedarfs verglichen mit vorbekannten Nahverkehrssystemen ergibt.

Aus den vorgenannten Gründen weisen die Start- und Landemöglichkeiten der Abfertigungseinrichtungen, insbesondere bevorzugt aller Abfertigungseinrichtungen, daher bevorzugt einen Höhenunterschied kleiner 50 m, bevorzugt kleiner 25 m, insbesondere kleiner 10 m auf.

In einer vorteilhaften Weiterbildung des erfindungsgemäßen Verfahrens wird zumindest eine On-Demand-Abfertigungseinrichtung bereitgestellt, welche mit mindestens einer On-Demand-Flugroute mit einer Abfertigungseinrichtung verbunden ist. Hierbei fliegt lediglich bedarfsweise, insbesondere durch einen Passagier manuell angefordert, ein Fluggerät auf der On-Demand-Flugroute zu der On-Demand-Abfertigungseinrichtung. Diese vorteilhafte Ausgestaltung ermöglicht somit, nur selten angeflogene Zielpunkte in das Transportsystem einzubinden. Typischerweise ist es bei solchen Zielpunkten aufgrund des geringen Bedarfs wirtschaftlich nicht sinnvoll, einen kontinuierlichen Flugverkehr vorzusehen. Durch manuelles Vorgeben eines solchen Zielpunktes kann dennoch als Ausnahmesituation ein Fluggerät von einer Abfertigungseinrichtung abseits der Flugrouten mit kontinuierlichem Flugverkehr auf der vorgenannten On-Demand-Flugroute automatisiert zu der On-Demand-Abfertigungseinrichtung gesteuert werden, vorzugsweise durch das Steuerungssystem des Transportsystems.

Solche On-Demand-Abfertigungseinrichtungen können beispielsweise an Privathäusern vorgesehen sein, an welchen nur selten ein Bedarf zur Passagierbeförderung besteht. Mit dieser vorteilhaften Ausführungsform ist somit eine Eingliederung des Individualverkehrs in das Transportsystem mit kontinuierlich bedienten Flugrouten möglich.

Typischerweise wird im Normalmodus ein stetiger Transportbedarf vorliegen, sodass in der Regel stets ein Passagier für ein startendes Fluggerät bereitsteht. Sofern kein Passagier bereitsteht und dennoch beispielsweise aufgrund einer vorgegebenen Regelstartfrequenz oder aufgrund eines vorgegebenen Regelabstands zu dem unmittelbar vorausfliegenden Fluggerät ein Start eines Fluggeräts erfolgen sollte, kann in einer lokalen und temporären Abkehr vom Normalmodus auf einen Start eines Fluggeräts verzichtet werden. Hierdurch ergibt sich der Vorteil, dass kein Energiebedarf und auch kein Verschleiß durch ein unbeladen fliegendes Fluggerät entsteht. Es entsteht jedoch der Nachteil, dass sich die durchschnittliche Anzahl von Fluggeräten an den Abfertigungseinrichtungen durch eine solche lokale Unterbrechung des kontinuierlichen Flugbetriebs verändert. Es ist somit eine Kompensation durch das Bereitstellen von Parkplätzen und/oder durch das lokale Aussetzen von Starts von auf diese Abfertigungsstation zufliegenden Fluggeräten notwendig. Vorteilhaft ist es daher, dass an den Abfertigungseinrichtungen ein kontinuierlicher Start von Fluggeräten mit oder ohne Passagiere erfolgt.

In einer vorteilhaften Weiterbildung des Verfahrens zum Betreiben eines Transportsystems zur Passagierbeförderung ist eine Aufnahmeprozedur für ein externes Fluggerät vorgesehen. Hierbei wird das externe Fluggerät in dem automatisierten Flug auf einer Flugroute eingebunden. In dieser vorteilhaften Ausführungsform wird somit die Möglichkeit geschaffen, dass ein bisher sich nicht in dem Transportsystem befindendes Fluggerät, insbesondere ein nicht von einem Steuerungssystem des Transportsystems überwachtes und gesteuertes Fluggerät, in das Transportsystem eingegliedert wird. Ein solches externes Fluggerätkann beispielsweise ein manuell geflogenes Fluggerät oder ein von einem externen Steuerungssystem gesteuertes Fluggerät sein.

Zum Einbinden solch eines externen Fluggeräts wird bevorzugt der kontinuierliche Flugbetrieb durch Unterbinden des Starts eines Fluggeräts temporär unterbrochen, sodass sich das externe Fluggerät an der nun freiwerdenden Position der Flugroute eingliedern kann. Vorteilhafterweise wird an der Abfertigungsstation, an welcher der Start eines Fluggeräts zum Einbinden des externen Fluggeräts unterbunden wurde, ein Fluggerät auf einem Parkplatz zwischengeparkt.

Weiterhin ist es vorteilhaft, dass dieses oder ein anderes geparktes Fluggerät wieder in eine Flugroute eingebunden wird, wenn das zuvor in das System eingebundene externe Fluggerät das System wieder verlässt.

Eine besonders komfortable Benutzung des Transportsystems wird in einer vorteilhaften Weiterbildung des erfindungsgemäßen Verfahrens erzielt, indem eine Zielabfertigungseinrichtung eines Passagiers erfasst wird und das Fluggerät dieses Passagiers automatisiert zu der Zielabfertigungseinrichtung gesteuert wird. Dies kann über lediglich eine Flugroute erfolgen, sofern Start- und Zielabfertigungseinrichtungen durch eine Flugroute unmittelbar verbunden sind oder über mehrere hintereinander geschaltete Flugrouten. Im letzteren Fall ist es vorteilhaft, dass eine optimierte Hintereinanderschaltung von Flugrouten automatisiert ermittelt wird, vorzugsweise mittels des Steuersystems des Transportsystems zur Passagierbeförderung. Hierbei werden bevorzugt die Gesamtwegstrecken ebenso wie etwaige vorhandene lokale Störungen auf Flugrouten, die zu einer temporären Einstellung des Flugbetriebs führen, berücksichtigt.

Vorteilhafterweise erreicht der Passagier auch über mehrere Flugrouten das Ziel ohne Umsteigen, indem das Fluggerät dieses Passagiers zwar an den Abfertigungseinrichtungen entlang der Gesamtflugroute zwischenlandet, jedoch - gegebenenfalls nach automatischer Wartung wie nachfolgend beschrieben - seinen Weg auf der Gesamtflugroute wieder fortsetzt. Ebenso liegt es im Rahmen der Erfindung, dass ein solcher Passager an einer Abfertigungsstation in ein anderes Fluggerät umsteigt.

Bei dem erfindungsgemäßen Verfahren befindet sich ein Fluggerät zwischen zwei Flugrouten zumindest kurzzeitig in einer Abfertigungseinrichtung. Vorteilhafterweise erfolgt während des Aufenthalts eines Fluggeräts in einer Abfertigungseinrichtung eine Wartung und/oder eine Energieversorgung des Fluggeräts, insbesondere ein Aufladen oder ein Wechsel einer Akkumulatorbatterie des Fluggeräts. Hierdurch wird die dauerhafte Verfügbarkeit des Fluggeräts für das Transportsystem sichergestellt.

Ohne Beschränkung kann in Weiterbildung dieser Idee vorgesehen sein, dass die wenigstens eine eine der folgenden Stationen aufweist:
Entnahmestation zum Entnehmen wenigstens einer Energieversorgungseinheit des Fluggeräts, insbesondere einer Akkumulatorbatterie; Einsetzstation zum Einsetzen wenigstens einer Energieversorgungseinheit des Fluggeräts, insbesondere einer Akkumulatorbatterie; Ladestation zum Aufladen oder Auffüllen wenigstens einer Energieversorgungseinheit des Fluggeräts, insbesondere einer Akkumulatorbatterie bzw. einer Brennstoffzelle oder eines Verbrennungsmotors; Einsteigestation zum Einsteigen von Passagieren in das Fluggerät;Aussteigestation zum Aussteigen von Passagieren aus dem Fluggerät; Einladestation zum Einladen von Transportgut in das Fluggerät; Ausladestation zum Ausladen von Transportgut aus dem Fluggerät;Wartungsstation zum technischen Warten des Fluggeräts; Eine oder mehrere Fördervorrichtungen zum Fördern des Fluggeräts zu einem Start- und/oder Landeplatz; Ausschleusestation zum Ausschleusen des Fluggeräts aus der Fördervorrichtung; Einschleusestation zum Einschleusen eines Fluggeräts in die Fördervorricht.

Typischerweise besteht bei Transportsystemen für Passagiere ein räumlich inhomogener Bedarf an Förderkapazität, welcher sich zudem zeitlich ändert: Beispielsweise ist durch den Berufsverkehr bedingt meist morgens eine höhere Förderkapazität von der Peripherie eines Transportsystems zu dessen Zentrum notwendig als in umgekehrter Richtung. Abends ergibt sich eine umgekehrte Anforderung: Hier ist eine höhere Förderkapazität vom Zentrum zur Peripherie als in umgekehrter Richtung notwendig.

In einer vorteilhaften Weiterbildung wird einem solchen asymmetrischen Bedarf an Förderkapazität Rechnung getragen, indem für vorgegebene Zeitfenster eine erhöhte Förderung in der gewünschten Richtung erfolgt, insbesondere durch eine erhöhte Startfrequenz und/oder einen verringernden Abstand zum unmittelbar vorausfliegenden Fluggerät in der gewünschten Flugrichtung, um eine erhöhte Förderkapazität für Passagiere zu erzielen. Vorteilhafterweise wird hierzu auf bidirektional ausgebildeten Flugrouten eine asymmetrische Startfrequenz und/oder ein asymmetrischer Mindestabstand zum unmittelbar vorausfliegenden Fluggerät vorgegeben, sodass in der gewünschten Richtung auf dieser bidirektionalen Flugrichtung eine höhere Förderkapazität erzielt wird, als in der Gegenrichtung.

Diese vorteilhafte Ausgestaltung weist zwar den Vorteil auf, dass eine Energieeinsparung durch bedarfsgerechte Anpassung der Förderkapazität erfolgt. Gleichzeitig bewirkt eine solche Ausgestaltung jedoch eine Akkumulation von Fluggeräten in dem Bereich, zu dem eine erhöhte Förderkapazität ausgebildet wird. Im Beispiel des Berufsverkehrs erfolgt somit morgens eine Verschiebung der mittleren Anzahl von Fluggeräten von der Peripherie des Transportsystems zum Zentrum des Transportsystems. Die Abfertigungseinrichtungen im Zentrum des Transportsystems müssen somit eine erhöhte Parkkapazität aufweisen, da die sich im Zentrum befindenden Abfertigungseinrichtungen im zeitlichen Mittel von mehr Fluggeräten angeflogen werden, als von diesen wegfliegen. Entsprechend muss abends an den Abfertigungseinrichtungen der Peripherie des Transportsystems eine erhöhte Parkkapazität vorgesehen sein, da bei der abendlichen Umkehrung des Berufsverkehrs an diesen Abfertigungseinrichtungen der Peripherie im zeitlichen Mittel mehr Fluggeräte landen als starten.

In einer vorteilhaften Weiterbildung des Verfahrens wird daher für eine Mehrzahl der Abfertigungseinrichtungen, vorzugsweise für alle Abfertigungseinrichtungen, eine Mindestanzahl an freien Parkplätzen für Flottenverschiebungen vorgehalten.

Wie zuvor beschrieben, ist es dabei vorteilhaft, bei bekanntem erhöhten Transportbedarf zunächst bei den Abfertigungseinrichtungen im Startbereich des erhöhten Transportbedarfs zusätzliche Fluggeräte vorzusehen und hingegen an den Abfertigungseinrichtungen im Zielbereich des erhöhten Beförderungsbedarfs zusätzliche freie Parkplätze zur Flottenverschiebung vorzusehen. Hierdurch wird eine temporäre asymmetrische Förderkapazität ermöglicht.

In einer vorteilhaften Weiterbildung des Verfahrens wird zumindest eine Teilmenge der Abfertigungseinrichtungen mit mehreren benachbarten Abfertigungseinrichtungen, bevorzugt mit allen benachbarten Abfertigungseinrichtungen, jeweils über eine Flugroute verbunden. Durch diese vorteilhafte engmaschige Vernetzung der Abfertigungseinrichtungen können beliebige Wege innerhalb des Systems auf den kürzest möglichen Verbindungspfaden bedient werden.

Um eine Verbindung jedes beliebigen Paars von Abfertigungseinrichtungen des Transportsystems zu gewährleisten, ist vorteilhafterweise jedes Paar von Abfertigungseinrichtungen zumindest mittelbar über Flugrouten miteinander verbunden.

Vorteilhafterweise ist im Normalmodus zumindest für eine Teilmenge der Abfertigungseinrichtungen, bevorzugt für alle Abfertigungseinrichtungen, eine Startfrequenz und/oder eine Landefrequenz im Bereich von einer Sekunde bis 30 Minuten, bevorzugt im Bereich einer Sekunde bis fünf Minuten, insbesondere im Bereich einer Sekunde bis 60 Sekunden, höchst vorzugsweise von etwa 30 Sekunden, vorgegeben. Hierdurch wird insbesondere mit den bereits verfügbaren Fluggeräten eine effiziente Auslastung gewährleistet. Zusätzlich oder alternativ ist es vorteilhaft, dass im Normalmodus zumindest für eine Teilmenge der Abfertigungseinrichtungen, bevorzugt für alle Abfertigungseinrichtungen, für die Flugrouten jeweils ein Abstand eines Fluggeräts zu dem vorausfliegenden Fluggerät im Bereich 10 m bis 2 km, bevorzugt 50 m bis 1 km, insbesondere 100 m bis 800 m, bevorzugt etwa 550 m, vorgegeben wird.

Bevorzugt weisen die Flugrouten eine Länge kleiner 100 km, bevorzugt kleiner 50 km, insbesondere kleiner 25 km auf. Hierdurch erniedrigen sich insbesondere die technischen Anforderungen an die Energiekapazität der Fluggeräte.

Da Start- und Landevorgänge gegenüber einem kontinuierlichen Flug auf einer Flugroute einen vergleichsweisen hohen Zeit- und Energiebedarf aufweisen, ist es für eine effiziente Ausbildung des Transportsystems vorteilhaft, dass die Abfertigungseinrichtungen voneinander mindestens 500 m, bevorzugt mindestens 1 km, insbesondere mindestens 5 km entfernt sind.

Insbesondere ist es vorteilhaft, dass der mittlere Abstand der Abfertigungseinrichtungen des Transportsystems im Bereich 2 km bis 20 km, insbesondere 5 km bis 15 km, bevorzugt bei etwa 10 km liegt.

Zumindest eine Teilmenge der Abfertigungseinrichtungen, bevorzugt alle Abfertigungseinrichtungen, weist in einer vorteilhaften Ausbildung des Transportsystems Warteeinrichtungen zur Wartung, Reparatur und/oder Energieversorgung der Fluggeräte auf. Insbesondere ist es vorteilhaft, dass die Abfertigungseinrichtungen für jede Warteeinrichtung eine Fördereinrichtung zum automatisierten Befördern des Fluggeräts zwischen Warteeinrichtung und Start- und/oder Landeplatz aufweisen.

Die Abfertigungseinrichtungen können eine Fläche aufweisen, welche sowohl zum Start als auch zur Landung der Fluggeräte dient. In einer vorteilhaften Weiterbildung erfolgt eine Erhöhung der Start- und Landefrequenz der Abfertigungseinrichtungen, indem eine Startfläche und eine separate Landefläche vorgesehen sind. Eine weitere Erhöhung der Start- und Landekapazität einer Abfertigungsfläche wird vorteilhafterweise durch zusätzliche Start- und Landeflächen ermöglicht.

Bei dem erfindungsgemäßen Transportsystem ist eine Mehrzahl von Abfertigungseinrichtungen durch Flugrouten für Fluggeräte verbunden. In einer vorteilhaften Ausgestaltung des Transportsystems wird dieser Umstand zum Erfassen von Umgebungsbedingungen genutzt:
Es liegt im Rahmen der Erfindung, dass das Steuersystem an externe Sensoren und/oder Informationsquellen für Umgebungsbedingungen angeschlossen ist, insbesondere an Datenbanken von Wetterdiensten.

Die räumliche Abdeckung des Gebiets des Transportsystems durch die auf den Flugrouten fliegenden Fluggeräten wird in dieser vorteilhaften Ausgestaltung somit genutzt, um Informationen über die Umgebungsbedingungen zu erhalten. Die Sensoren sind hierbei vorteilhafterweise mit dem Steuersystem des Transportsystems verbunden und das Steuersystem ist bevorzugt ausgebildet, um automatisiert aus den Sensordaten der Fluggeräte Umgebungsbedingungen abzuleiten und automatisiert solche Umgebungsbedingungen zu erkennen, bei welchen eine Unterbrechung des Flugbetriebs und somit das Auslösen des zuvor beschriebenen Notfall-Modus notwendig ist. Insbesondere weist das Steuerungssystem hierzu bevorzugt das bereits genannte Flugüberwachungssystem auf.

Weiterhin ist es vorteilhaft, dass das Steuersystem darüber hinaus ausgebildet ist, die räumliche Ausdehnung solcher Umgebungsbedingungen zu erfassen, welche eine temporäre Einstellung des Flugbetriebs bedingen. Bei dieser vorteilhaften Ausführungsform wird durch das Steuersystem somit für jede Flugroute individuell ermittelt, ob eine Einstellung des Flugbetriebs aufgrund der ungünstigen Umgebungsbedingungen notwendig ist, sodass eine auf die Umgebungsbedingungen angepasste und dennoch räumlich minimierte Einrichtung des Notfall-Modus ermöglicht wird.

Vorteilhafterweise werden somit die Sensordaten der Fluggeräte an das genannte Flugüberwachungssystem des Steuerungssystems des Transportsystems weitergeleitet.

Grundsätzlich ist das erfindungsgemäße Transportsystem zur Passagierbeförderung durch Vorsehen einer entsprechenden Anzahl von Abfertigungseinrichtungen und Fluggeräten beliebig skalierbar. Nachfolgend werden typische Größen angegeben, ausgehend von dem Vorsehen eines erfindungsgemäßen Transportsystems zur Passagierbeförderung für ein dicht besiedeltes Gebiet, insbesondere eine Großstadt und ausgehend von den technischen Daten, welche durch bereits vorhandene Fluggeräte, insbesondere Multicopter, erreicht werden oder in absehbarer Zeit erreicht werden können:

| Größe | Typischer Wertebereich | Beispielhafter Wert |
|---|---|---|
| Flächenabdeckung 200 km² bis 2.000 km² | 100 km² bis 10.000 km² | 30 km x 20 km (600 km²) |
| Mittlerer Abstand der Abfertigungseinrichtungen | 5 km bis 25 km | 10 km |
| Durchschnittliche Fluggeschwindigkeit der Fluggeräte | 50 km/h bis 200 km/h | 75 km/h |
| Mittlere Anzahl der sich im Normalmodus gleichzeitig in der Luft befindenden Fluggeräte | 100 bis 3000 | 750 |
| Akkukapazität der Fluggeräte | 0,5 h bis 4 h Flugzeit inklusive 5 bis 40 Starts/Landungen | 1 h Flugzeit inklusive 10 Starts/Landungen |
| Anzahl der in jeder Abfertigungsvorrichtung vorgehaltenen Wechselakkumulatoren | 200 bis 2000 | 600 |

Die Abfertigungseinrichtungen sind bevorzugt wie in PCT/EP2017/068602 ausgebildet. Zusätzlich oder alternativ ist es vorteilhaft, die Abfertigungseinrichtungen als Start-/Landeeinrichtung gemäß PCT/EP2017/068628 auszubilden.

Die Fluggeräte des erfindungsgemäßen Verfahrens und des erfindungsgemäßen Transportsystems sind für den Transport von Passagieren geeignet und weisen somit bevorzugt zumindest einen, insbesondere bevorzugt mindestens zwei Sitzplätze für Passagiere auf. Weiterhin sind die Fluggeräte des erfindungsgemäßen Verfahrens und des erfindungsgemäßen Transportsystems für einen senkrechten Start sowie eine senkrechte Landungs geeignet ausgebildet. Diese Eigenschaft wird auch als v.t.o.l. (vertical take off and landing) bezeichnet.

Die Fluggeräte sind bevorzugt elektrisch ausgebildet, d.h. der für die Flugbewegung notwendige Schub wird bevorzugt mittels eines oder mehrerer Elektromotoren erzielt. Hierdurch ist ein umweltfreundlicher Betrieb möglich.

Die elektrische Energie wird bevorzugt durch einen Akkumulator bereitgestellt. Hierdurch kann eine schnelle Energieversorgung durch Aufladen und/oder Austausch des Akkumulators erfolgen. Ebenso liegen andere Energiequellen wie beispielsweise Brennstoffzellen, auf Verbrennungsmotoren basierende elektrische Generatoren oder eine Kombination hiervon im Rahmen der Erfindung.

Ebenso liegen andere Antriebsmöglichkeiten, insbesondere Verbrennungsmotoren im Rahmen der Erfindung.

Die Fluggeräte sind bevorzugt als Multicopter, insbesondere Volocopter^{®} (IR 1251865) der Anmelderin, Helikopter, Flugzeug mit Tilt-Wing oder Flugzeug mit Tilt-Rotor ausgebildet. Ebenso liegt es im Rahmen der Erfindung, Fluggeräte unterschiedlicher Fluggerät-Typen für das Verfahren und/oder das Transportsystem zu verwenden.

Vorzugsweise sind die Fluggeräte als Multicopter, insbesondere elektrischer Multicopter ausgebildet. Multicopter bieten besondere Vorzüge hinsichtlich der Manövrierfähigkeit und Möglichkeit zum externen steuern durch ein automatisiertes Steuerungssystem.

Weitere Eigenschaften und Vorteile der Erfindung ergeben sich aus der Beschreibung eines Ausführungsbeispiels anhand der Zeichnung.

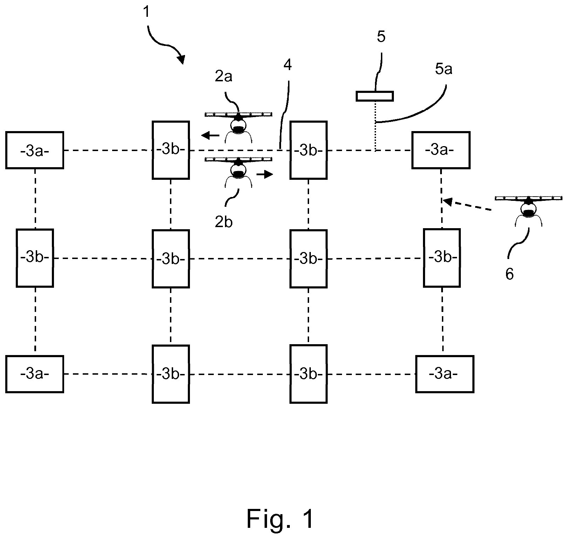

Figur 1 zeigt eine schematische Darstellung eines Ausführungsbeispiels eines erfindungsgemäßen Transportsystems zur Passagierbeförderung.

Das Transportsystem 1 weist eine Mehrzahl - vorliegend über 1000 - von senkrecht startenden und senkrecht landenden Fluggeräten, vorliegend elektrische Multicopter für Passagiere auf. Diese Multicopter sind als Volocopter^{®} der e-volo GmbH ausgebildet. Exemplarisch sind zwei Multicopter 2a, 2b des Transportsystems dargestellt. Ebenso können die Fluggeräte als Helicopter oder als Flugzeuge mit Tilt-Wing oder Tilt-Rotor oder eine Mischung hiervon in weiteren Ausführungsbeispielen ausgebildet sein.

Das Transportsystem 1 weist weiterhin eine Mehrzahl von Abfertigungseinrichtungen 3a, 3b auf, welche für den Start und die Landung der Multicopter 2a, 2b ausgebildet sind. Jede Abfertigungseinrichtung weist Parkplätze für eine Mehrzahl von Multicoptern auf.

Weiterhin weist das Transportsystem 1 ein (nicht dargestelltes) Steuerungssystem mit einer Rechnereinheit mit Datenspeicher auf. Dieses Steuerungssystem ist mit den Abfertigungseinrichtungen 3a, 3b sowie drahtlos mit den Multicoptern 2a, 2b verbunden. Das Steuerungssystem ist zum automatisierten Start und der automatisierten Landung der Multicopter 2a, 2b an den Abfertigungseinrichtungen 3a, 3b und zum automatisierten Steuern der Multicopter entlang vorgegebener Flugrouten zwischen den Abfertigungseinrichtungen ausgebildet. Die Multicopter weisen jeweils GPS-Empfänger auf, deren Daten an das Steuerungssystem weitergeleitet werden. Hierdurch wird ein automatisiertes Fliegen auf durch das Steuerungssystem vorgegebenen Flugrouten ermöglicht. Ebenso können die Multicopter weitere oder andere Sensoren/Detekoren zur Lage- und Positionsbestimmung aufweisen.

Bei dem vorliegenden Ausführungsbeispiel ist jede Abfertigungseinrichtung 3a, 3b mit jeder benachbarten Abfertigungseinrichtung 3a, 3b jeweils über eine Flugroute verbunden. Die Flugrouten sind als gestrichelte Linien dargestellt. Exemplarisch ist eine Flugroute mit dem Bezugszeichen 4 gekennzeichnet.

Das Steuerungssystem ist für einen kontinuierlichen Flugverkehr der Multicopter 2a, 2b auf den Flugrouten 4 ausgebildet. An jeder der Abfertigungseinrichtungen 3a, 3b erfolgt somit in stetiger Abfolge ein Start und/oder eine Landung eines Multicopters.

Das Transportsystem ermöglicht somit einen Personentransport in dem von dem Transportsystem überspannten Gebiet, wobei zwischen den Abfertigungseinrichtungen keine Infrastruktur in Form von Straßen oder Schienen notwendig ist.

Aus Gründen der einfacheren Darstellbarkeit sind die Abfertigungseinrichtungen 3a, 3b in Figur 1 jeweils auf einem Kreuzungspunkt eines rechtwinkligen Gitters angeordnet, d. h., die Flugrouten verlaufen senkrecht oder parallel zueinander. Typischerweise sind bei der Realisierung solch eines Transportsystems weitere Bedingungen wie beispielsweise Punkte mit erhöhtem Passagieraufkommen (zum Beispiel Abfertigungseinrichtungen auf oder in der Nähe von Bahnhöfen) oder natürliche Gegebenheiten oder Flugverbotszonen (beispielsweise in der Nähe von Krankenhäusern) zu beachten, so dass typischerweise ein nicht rechtwinkliges Netz ausgebildet werden wird.

Die Abfertigungseinrichtungen 3b sind jeweils als eine Abfertigungseinrichtung gemäß PCT/EP2017/068602 ausgebildet. Sie können hierbei bevorzugt ein Gebäude umfassen, wie in den Figuren 6 und 7 der vorgenannten Referenz gezeigt und der dazugehörigen Figurenbeschreibung erläutert. Ebenso können die Abfertigungseinrichtungen auf eigenen Stützkonstruktionen angeordnet sein, die gegebenenfalls vorhandene Infrastruktur, wie beispielsweise vorhandene Gebäude, insbesondere Bahnhöfe oder Parkhäuser für Autos überspannen.

Die Abfertigungseinrichtungen 3a und 3b weisen Start- und Landemöglichkeiten für die Multicopter vorliegend in einer Höhe zwischen 90 und 110 Metern über dem Boden auf. Die mittlere Flughöhe auf den Flugrouten beträgt etwa 130 Meter über dem Boden. Daher ist für alle Flugrouten der Höhenunterschied zwischen höchstem und niedrigstem Punkt der Flugroute geringer als 50 Meter (maximal 40 Meter), so dass ein energiesparender Betrieb erzielt wird.

Alle Abfertigungseinrichtungen 3a, 3b weisen Warteeinrichtungen zum automatisierten Austausch von Akkumulatorbatterien der Multicopter auf. Weiterhin weisen alle Abfertigungseinrichtungen 3a, 3b automatisierte Fördereinrichtungen in Form von Förderbändern auf, mittels derer ein gelandeter Multicopter von dem Landeplatz der Abfertigungseinrichtung zur Warteeinrichtung und von der Warteeinrichtung zu einem Startplatz oder zu einem freien Parkplatz der Abfertigungseinrichtung befördert werden kann. In der Warteeinrichtung erfolgt automatisiert der Austausch der Akkumulatorbatterie des Multicopters gegen eine vollständig geladene Akkumulatorbatterie. Die entnommene Akkumulatorbatterie wird automatisch einer Ladestation für die Akkumulatorbatterie zugeführt.

Die Abfertigungseinrichtungen 3a, 3b weisen darüber hinaus Ausstieg- und Zustiegmöglichkeiten für Passagiere von und zu den Multicoptern auf. Insbesondere können Zugangsmöglichkeiten wie in PCT/EP2017/068602 beschrieben vorgesehen sein.

Alle Multicopter 2a, 2b des Transportsystems weisen Sensoren zum Erfassen von Umgebungsbedingungen auf, vorliegend weist jeder Multicopter jeweils einen Branddetektor, einen Rauchdetektor, einen Winddetektor und einen Niederschlagsdetektor auf. Die Messdaten dieser Sensoren werden einem Flugüberwachungssystem des Steuerungssystems des Transportsystems weitergeleitet.

Das Flugüberwachungssystem wertet die Messdaten automatisiert aus. Bei Vorliegen einer Gefahrensituation, insbesondere, wenn vorgegebene Grenzparameter beispielsweise für eine Windgeschwindigkeit oder eine Niederschlagsmenge überschritten werden, identifiziert das Flugüberwachungssystem automatisiert diejenigen Flugrouten, welche aufgrund der kritischen Umgebungsbedingungen temporär stillgelegt werden sollen. Ebenso gibt das Flugüberwachungssytem die betroffenen Flugrouten wieder für den Normalmodus frei, wenn keine Gefahrensituation mehr detektiert wird.

Im Normalbetrieb befindet sich das Transportsystem in einem Normalmodus, in welchem mittels des Steuerungssystems der kontinuierliche Flugbetrieb der Multicopter auf den Flugrouten erfolgt. Bei Vorliegen einer Gefahrensituation wie zuvor beschrieben wird für die betreffenden Flugrouten 4 der Normalmodus beendet und die Multicopter werden automatisiert gelandet. Hierzu weist jede Abfertigungseinrichtung im Normalmodus ständig eine Notfall-Parkkapazität an freien Parkplätzen auf:
In dem vorliegenden Ausführungsbeispiel ergibt sich die Notfall-Parkkapazität einer Abfertigungseinrichtung aus der Anzahl aller auf einer Flugroute dieser Abfertigungseinrichtung gleichzeitig auf diese Abfertigungseinrichtung zufliegenden Multicopter.

Wie in Figur 1 ersichtlich, sind die Abfertigungseinrichtungen 3a jeweils mit zwei Flugrouten verbunden, die äußeren Abfertigungseinrichtungen 3b jeweils mit drei Flugrouten und die beiden inneren Abfertigungseinrichtungen 3b jeweils mit vier Flugrouten. Alle Flugrouten in diesem Ausführungsbeispiel sind im Normalmodus als bidirektionale, symmetrische Flugrouten ausgebildet. Bei der Flugroute 4 ist exemplarisch dargestellt, dass sich der Multicopter 2a von der rechten zu der linken Abfertigungseinrichtung dieser Flugroute 4 bewegt und der Multicopter 2b in entgegengesetzter Richtung. Hierdurch soll angezeigt werden, dass auf solch einer bidirektionalen Flugroute stetig Multicopter zwischen den mit dieser Flugroute verbundenen Abfertigungseinrichtungen in beiden Richtungen verkehren.

Die vorgenannte Bedingung für eine Notfallparkkapazität bedeutet nun beispielsweise für eine der beiden inneren Abfertigungseinrichtungen 3b, dass zu einem beliebigen Zeitpunkt im Notfallmodus auf insgesamt vier Flugrouten sich Multicopter "in der Luft" befinden, welche auf diese Abfertigungseinrichtung zufliegen. Die Gesamtanzahl dieser auf den vier Flugrouten auf diese Abfertigungseinrichtung zufliegenden Multicopter ergibt die Notfall-Parkkapazität für diese Abfertigungseinrichtung. Entsprechendes gilt für die Abfertigungseinrichtungen, welche mit drei bzw. mit zwei Flugrouten verbunden sind.

In einer Gefahrensituation wird mittels des Steuerungssystems für die betreffende Flugroute wie zuvor beschrieben der Normalmodus beendet. Dies bedeutet, dass an den beiden mit dieser Flugroute verbundenen Abfertigungseinrichtungen kein Start von Multicoptern auf dieser Flugroute mehr erfolgt. Ist beispielsweise für die Flugroute 4 eine Gefahrensituation detektiert worden, so erfolgt kein weiterer Start von Multicoptern auf der Flugroute 4 an den mit der Flugroute 4 verbundenen Abfertigungseinrichtungen 3b. Sofern andere mit diesen Abfertigungseinrichtungen 3b verbundene Flugrouten nicht von der Gefahrensituation betroffen sind, kann für diese Flugrouten ein Start von Multicoptern von den Abfertigungseinrichtungen gemäß Normalmodus erfolgen.

Die vorangehend beschriebene Gefahrensituation im Bereich der Flugroute 4 führt somit dazu, dass keine weiteren Starts für die Flugroute 4 erfolgen. Es befinden sich jedoch typischerweise noch Multicopter auf der Flugroute 4 im Flug. Im vorliegenden Ausführungsbeispiel beenden alle diese Multicopter 2a, 2b ihren Flug entlang der Flugroute 4 und in der ursprünglichen Flugrichtung. Das Vorsehen von Notfall-Parkkapazitäten gemäß der vorgenannten Bedingung stellt sicher, dass für alle sich auf der Flugroute 4 befindenden Multicopter Parkplätze an den jeweiligen Ziel-Abfertigungseinrichtungen 3b vorhanden sind. Nach Landen eines Multicopters erfolgt automatisiert ein Fördern des Multicoptes zu einem freien Parkplatz mittels eines Förderbandes.

Das in Figur 1 dargestellte Transportsystem des Ausführungsbeispiels weist weiterhin eine On-Demand-Abfertigungseinrichtung 5 auf. Diese ist über eine On-Demand-Flugroute 5a mit einer der Flugrouten des Transportsystems verbunden. Die On-Demand-Flugroute 5a weist jedoch keinen kontinuierlichen Flugverkehr auf. Ein solcher findet lediglich auf Anforderung durch einen Benutzer statt. Die On-Demand-Abfertigungseinrichtung 5 könnte beispielweise auf oder an einem privaten Wohnhaus angeordnet sein, so dass ein Flugverkehr nur zur Personenbeförderung zu dem privaten Wohnhaus gewünscht ist.

Ein Nutzer kann nun bei Verwendung eines sich im kontinuierlichen Flugbetrieb befindenden Multicopters die On-Demand-Abfertigungseinrichtung 5 als Ziel eingeben. Da es sich um ein Privathaus handelt, ist eine solche Zieleingabe nur unter zusätzlicher Eingabe eines Passworts oder einer vergleichbaren Identifizierung beispielsweise mittels eines RFID-Chips oder anderer Identifizierungsmaßnahmen möglich.

Das Steuersystem leitet nun automatisiert den betreffenden Multicopter auf die On-Demand-Flugroute 5a und bringt ihn an der On-Demand-Abfertigungseinrichtung 5 zur Landung. Hierdurch entsteht somit eine Lücke auf der regulären Flugroute, welche beibehalten oder automatisiert durch das Steuerungssystem an der nächsten Abfertigungseinrichtung durch einen geparkten Multicopter wieder geschlossen werden kann. Der an der On-Demand-Abfertigungseinrichtung 5 parkende Multicopter kann nun mit oder ohne Passagier den regulären Flugrouten wieder zugeführt werden: Auf entsprechende Anfrage bzw. Freigabe durch den Benutzer unterbindet das Steuerungssystem einen Start der entsprechenden regulären Flugroute, so dass eine Lücke auf dieser Flugroute entsteht, welche durch den vorgenannten Multicopter über die On-Demand-Flugroute 5a wieder ausgefüllt wird, so dass der Multicopter den regulären Flugrouten wieder zugeführt ist.

In Figur 1 ist weiterhin ein externer Multicopter 6 dargestellt. Dieser ist an sich nicht Bestandteil des Transportsystems. Beispielsweise ist der externe Multicopter 6 ein privater Multicopter, welcher manuell geflogen wird. Ebenso kann der externe Multicopter 6 ein automatisiert gesteuerter Multicopter eines angrenzenden Transportsystems sein und sich somit auf einer Flugroute des angrenzenden Transportsystems befinden. Zur Eingliederung des externen Multicopters 6 erfolgt ähnlich wie zuvor zu der On-Demand-Flugroute 5a beschrieben zunächst eine Anfrage an das Steuerungssystem, initiiert durch den Benutzer und/oder ein weiteres Steuerungssystem des externen Transportsystems. Auch hier wird durch Auslassen des Starts eines Multicopters eine Lücke auf der betreffenden regulären Flugroute des Transportsystems gebildet, in welche sich der 4externe Multicopter 6 eingliedert. Nach Eingliederung übernimmt das Steuersystem des Transportsystems die Steuerung des externen Multicopters 6. Ab diesem Zeitpunkt verhält sich der externe Multicopter 6 somit identisch zu den regulären Multicoptern 2a, 2b und wird ebenfalls ausschließlich über das Steuerungssystem des Transportsystems gesteuert.

In umgekehrter Reihenfolge kann der externe Multicopter 6 das Transportsystem verlassen, wobei auch hier analog zu der vorgenannt beschriebenen On-Demand-Flugroute 5a die hierdurch entstehende Lücke durch einen geparkten Multicopter aufgefüllt werden kann.

Bei dem vorliegenden Ausführungsbeispiel weisen die Abfertigungseinrichtungen für jede Flugroute, welche mit der Abfertigungseinrichtung verbunden ist, jeweils einen Start- und einen Landeplatz auf. Über das Steuerungssystem ist im Normalmodus eine Startfrequenz von 30 Sekunden vorgegeben, d. h. auf jeder Flugroute und in jeder Flugrichtung startet im Normalmodus alle 30 Sekunden ein Multicopter.

Die Abfertigungseinrichtungen 3a, 3b weisen teilweise zusätzlich zu den zuvor beschriebenen freien Parkplätzen gemäß der Notfall-Parkkapazität freie Parkplätze für Flottenverschiebungen auf:
In einem typischen Startgebiet besteht morgens, beispielsweise zwischen 07:00 Uhr und 09:00 Uhr ein erhöhter Personenförderungsbedarf von der Peripherie ins Zentrum, in dem vorliegenden Ausführungsbeispiel wird ein erhöhter Personenförderungsbedarf zwischen 07:00 Uhr und 09:00 Uhr ausgehend von den Eckpunkten des Transportsystems (Abfertigungseinrichtungen 3a) zu den beiden inneren Abfertigungseinrichtungen 3b, welche jeweils mit vier Flugrouten verbunden sind, angenommen. Entsprechend wird abends zwischen 17:00 und 19:00 Uhr ein erhöhter Personenbeförderungsbedarf von den beiden vorgenannten inneren Abfertigungseinrichtungen 3b zu den Abfertigungseinrichtungen 3a angenommen. Dies ist in bekannter Weise darin begründet, dass sich Wohnplätze vermehrt in der Peripherie und Arbeitsplätze vermehrt im Zentrum finden.

Jede der Abfertigungseinrichtungen 3a weist daher eine Flottenverschiebungskapazität von jeweils 40 Parkplätzen auf. Entsprechend weist jede der beiden inneren Abfertigungseinrichtungen 3b jeweils eine Flottenverschiebungsparkkapazität von jeweils 80 Parkplätzen auf. Zu Beginn eines Tages um 07:00 Uhr sind die für die Flottenverschiebung vorgesehenen Parkplätze der Abfertigungseinrichtungen 3a mit Multicoptern gefüllt, d. h. zu diesem Zeitpunkt weist jede der Abfertigungseinrichtungen 3a jeweils 40 bereitgestellte Multicopter auf den Flottenverschiebungsparklätzen auf. Die Flottenverschiebungsparklätze der beiden inneren Abfertigungseinrichtungen 3b sind hingegen zu diesem Zeitpunkt frei, so dass insgesamt 160 freie Flottenverschiebungsparklätze an den inneren Abfertigungseinrichtungen 3b verfügbar sind.

Zwischen 07:00 Uhr und 09:00 Uhr erfolgt durch das Steuerungssystem ein Betrieb in einem modifizierten Normalmodus. In diesem modifizierten Normalmodus weisen die von den Abfertigungseinrichtungen 3a abgehenden Flugverbindungen eine asymmetrische Startfrequenz auf, welche sich auch über die weiteren Flugverbindungen bis zu der jeweils näherliegenden inneren Abfertigungseinrichtung 3b fortsetzt. In diesem modifizierten Normalmodus erfolgt somit auf den Flugrouten in Richtung einer der inneren Abfertigungseinrichtungen 3b eine höhere Startfrequenz (beispielsweise alle 20 Sekunden), als in entgegengesetzter Flugrichtung (beispielsweise alle 30 Sekunden). Im Ergebnis landen an den inneren Abfertigungseinrichtungen 3b im zeitlichen Mittel mehr Multicopter, als an diesen Abfertigungseinrichtungen starten. Die überschüssigen Multicopter werden an den freien Flottenverschiebungsparkplätzen geparkt. Entsprechend leeren sich die Flottenverschiebungsparkplätze der Abfertigungseinrichtungen 3a, da an diesen Abfertigungseinrichtungen im zeitlichen Mittel mehr Multicopter starten als landen. Bei der beispielhaft genannten asymmetrischen Startfrequenz wäre ein Flottenkontingent von 40 Multicoptern somit etwa in 40 Minuten verschoben, d.h. der modifizierte Normalmodus dauert in diesem Beispiel lediglich 40 Minuten an.

Nach Beenden des modifizierten Normalmodus führt das Steuerungssystem die eingangs beschriebene symmetrische Steuerung ein, so dass auf jeder Flugrichtung in beiden Richtungen eine identische Startfrequenz besteht.

Abends zwischen 17:00 und 19:00 Uhr erfolgt wiederum ein Betrieb in einem modifizierten Normalmodus mittels des Steuerungssystems. Dieser entspricht dem zuvor beschriebenen modifizierten Normalmodus, wobei jedoch die Richtung der asymmetrischen Steuerung umgekehrt ist, so dass eine erhöhte Beförderungskapazität ausgehend von den inneren Abfertigungseinrichtungen 3b zu den Abfertigungseinrichtungen 3a erzielt wird. Im Ergebnis leeren sich die Flottenverschiebungsparkplätze der inneren Abfertigungseinrichtungen 3b, wohingegen sich die Flottenverschiebungsparklätze der Abfertigungseinrichtungen 3a füllen. Diese Abfolge kann somit täglich oder bevorzugt an jedem Werktag wiederholt werden.

## Patentansprüche

1. Verfahren zum Betreiben eines Transportsystems (1) zur Passagierbeförderung,
beinhaltend:
- Bereitstellen einer Mehrzahl von senkrecht startenden und senkrecht landenden Fluggeräten (2a, 2b) für Passagiere;
- Bereitstellen einer Mehrzahl von Abfertigungseinrichtungen (3a, 3b) für den Start und die Landung von Fluggeräten (2a, 2b), wobei jede Abfertigungseinrichtung Parkplätze für eine Mehrzahl von Fluggeräten (2a, 2b) aufweist,
- Einrichten von Flugrouten (4) zwischen den Abfertigungseinrichtungen (3a, 3b), so dass jede Abfertigungseinrichtung mit zumindest einer weiteren Abfertigungseinrichtung über eine Flugroute (4) verbunden wird,
bei dem auf den Flugrouten (4) zumindest in einer Flugrichtung ein kontinuierlicher Flugverkehr von Fluggeräten (2a, 2b) erfolgt, mit automatisiertem Start, automatisiertem Flug entlang der Flugroute (4) sowie automatisierter Landung,
**dadurch gekennzeichnet,**
**dass** bei zumindest einer Teilmenge der Fluggeräte (2a, 2b), bevorzugt bei allen Fluggeräten (2a, 2b), Umgebungsbedingungen durch Sensoren, zumindest durch einen Branddetektor, Rauchdetektor, Winddetektor und/oder Niederschlagsdetektor, erfasst werden,
**dass** in einem Normalmodus zumindest eine Teilmenge der Abfertigungseinrichtungen (3a, 3b), bevorzugt alle Abfertigungseinrichtungen (3a, 3b), jeweils und ständig zumindest eine Notfall-Parkkapazität an freien Parkplätzen aufweisen, welche zumindest einer der folgenden Bedingungen entspricht:
a) zwei mit einer Flugroute (4) verbundene Abfertigungseinrichtungen (3a, 3b) weisen eine gemeinsame Notfall-Kapazität an freien Parkplätzen auf, welche zumindest der Anzahl der sich auf der Flugroute (4) zwischen den beiden Abfertigungseinrichtungen (3a, 3b) fliegenden Fluggeräten (2a, 2b) entspricht, bevorzugt ist vorgenannte Bedingung für jedes Paar von mit einer Flugroute (4) verbundenen Abfertigungseinrichtungen (3a, 3b) erfüllt;
b) die Notfall-Parkkapazität einer Abfertigungseinrichtung entspricht der Anzahl aller auf einer Flugroute (4) dieser Abfertigungseinrichtung gleichzeitig auf diese Abfertigungseinrichtung zufliegenden Fluggeräten (2a, 2b);
c) die Notfall-Parkkapazität entspricht der Summe aus der Hälfte der Anzahl aller auf einer Flugroute (4) dieser Abfertigungseinrichtung gleichzeitig auf diese Abfertigungseinrichtung zufliegenden und der Hälfte der Anzahl aller auf einer Flugroute (4) dieser Abfertigungseinrichtung gleichzeitig von dieser Abfertigungseinrichtung wegfliegenden Fluggeräten (2a, 2b);
**dass** durch ein Steuersystem des Transportsystems automatisiert aus den Sensordaten der Fluggeräte Umgebungsbedingungen abgeleitet und automatisiert solche Umgebungsbedingungen erkannt werden, bei welchen eine Unterbrechung des Flugbetriebs und das Auslösen eines Notfall-Modus notwendig ist,
und **dass** in dem Notfall-Modus für zumindest eine Teilmenge der Flugrouten (4), bevorzugt für alle Flugrouten (4), Startvorgänge von Fluggeräten (2a, 2b) an den mit diesen Flugrouten (4) verbundenen Abfertigungseinrichtungen (3a, 3b) gestoppt werden und die auf diesen Flugrouten (4) fliegenden Fluggeräte (2a, 2b) auf einer der mit dieser Flugroute (4) verbundenen Abfertigungseinrichtung landen und vorzugsweise automatisiert auf einen freien Parkplatz dieser Abfertigungseinrichtung gefördert werden, wobei die auf von dem Notfall-Modus betroffenen Flugrouten (4) fliegenden Fluggeräte (2a, 2b) entweder an der vorgesehenen Abfertigungseinrichtung in Flugrichtung landen, insbesondere bei Vorsehen einer Notfall-Parkkapazität gemäß Bedingung b), oder an der näherliegenden Abfertigungsstation dieser Flugroute (4) landen, insbesondere bei Vorsehen einer Notfall-Parkkapazität gemäß Bedingung c).

2. Verfahren nach Anspruch 1,
**dadurch gekennzeichnet,**
**dass** für jede Abfertigungseinrichtung (3a, 3b) eine Regelstartfrequenz vorgegeben wird, mit welcher Fluggeräte (2a, 2b) in einem Normalmodus starten und/oder dass für jede Flugroute (4) jeweils ein Regelabstand vorgegeben wird, welcher den Abstand eines Fluggeräts (2a, 2b) zu einem unmittelbar vorausfliegenden Fluggerät (2a, 2b) auf der jeweiligen Flugroute (4) in einem Normalmodus wiedergibt und/oder dass zumindest eine Teilmenge der Flugrouten (4), bevorzugt alle Flugrouten (4), bidirektional ausgebildet sind.

3. Verfahren nach einem der vorangegangenen Ansprüche,
**dadurch gekennzeichnet,**
**dass** zumindest eine Teilmenge der Flugrouten (4), bevorzugt alle Flugrouten (4), einen Höhenunterschied zwischen höchstem und niedrigstem Punkt der Flugroute (4) von weniger als 100 m, bevorzugt weniger als 50 m, insbesondere weniger als 30 m aufweisen.

4. Verfahren nach einem der vorangegangenen Ansprüche,
**dadurch gekennzeichnet,**
**dass** zumindest eine On-Demand-Abfertigungseinrichtung (5) bereitgestellt wird, welche mit mindestens einer On-Demand-Flugroute (5a) mit einer Abfertigungseinrichtung verbunden ist, wobei nur lediglich bedarfsweise, durch einen Passagier manuell angefordert, ein Fluggerät (2a, 2b) auf der On-Demand-Flugroute (5a) zu der On-Demand-Abfertigungseinrichtung (5) fliegt.

5. Verfahren nach einem der vorangegangenen Ansprüche,
**dadurch gekennzeichnet,**
**dass** eine Aufnahmeprozedur für ein externes Fluggerät (6) vorgesehen ist, wobei das externe Fluggerät (6) in den automatisierten Flug auf einer Flugroute (4) eingebunden wird, bevorzugt der dem externen Fluggerät (6) nächstliegenden Flugroute (4), insbesondere, dass ein Start eines Fluggeräts (2a, 2b) an einer Abfertigungseinrichtung dieser Flugroute (4) unterbunden oder verzögert wird und das externe Fluggerät (6) stattdessen in die Flugroute (4) eingebunden wird und/oder
**dass** eine Zielabfertigungseinrichtung eines Passagiers erfasst wird und das Fluggerät (2a, 2b) dieses Passagiers automatisiert zur der Zielabfertigungseinrichtung gesteuert wird, gegebenenfalls über mehrere hintereinandergeschaltete Flugrouten (4).

6. Verfahren nach einem der vorangegangenen Ansprüche,
**dadurch gekennzeichnet,**
**dass** während des Aufenthalts eines Fluggeräts (2a, 2b) in einer Abfertigungseinrichtung eine Wartung und/oder eine Energieversorgung des Fluggeräts (2a, 2b), insbesondere ein Aufladen oder ein Wechsel einer Akkumulatorbatterie des Fluggeräts (2a, 2b), erfolgt und/oder dass für eine Mehrzahl der Abfertigungseinrichtungen (3a, 3b), vorzugsweise für alle Abfertigungseinrichtungen (3a, 3b), eine Mindestanzahl an freien Parkplätzen für Flottenverschiebungen vorgehalten wird.

7. Verfahren nach einem der vorangegangenen Ansprüche,
**dadurch gekennzeichnet,**
**dass** zumindest eine Teilmenge der Flugrouten (4), bevorzugt alle Flugrouten (4), eine Abfertigungseinrichtung mit einer benachbarten Abfertigungseinrichtung verbinden, vorzugsweise, dass nur benachbarte Abfertigungseinrichtungen (3a, 3b) mit Flugrouten (4) verbunden sind und/oder dass zumindest eine Teilmenge der Abfertigungseinrichtungen (3a, 3b) mit mehreren benachbarten Abfertigungseinrichtungen (3a, 3b), bevorzugt mit allen benachbarten Abfertigungseinrichtungen (3a, 3b), jeweils über eine Flugroute (4) verbunden wird und/oder dass jedes Paar von Abfertigungseinrichtungen (3a, 3b) zumindest mittelbar über Flugrouten (4) miteinander verbunden wird.

8. Verfahren nach einem der vorangegangenen Ansprüche,
**dadurch gekennzeichnet,**
**dass** im Normalmodus zumindest für eine Teilmenge der Abfertigungseinrichtungen (3a, 3b), bevorzugt für alle Abfertigungseinrichtungen (3a, 3b), eine Startfrequenz im Bereich von 1 s bis 30 min, bevorzugt im Bereich 1 s bis 5 min, insbesondere im Bereich 1 s bis 60 s, höchst vorzugsweise von etwa 30 s, vorgegeben wird und/oder
**dass** im Normalmodus zumindest für eine Teilmenge der Abfertigungseinrichtungen (3a, 3b), bevorzugt für alle Abfertigungseinrichtungen (3a, 3b), für die Flugrouten (4) jeweils ein Abstand eines Fluggeräts (2a, 2b) zu dem vorausfliegenden Fluggerät (2a, 2b) im Bereich 10 m bis 2 km, bevorzugt 50 m bis 1 km, insbesondere 100 m bis 800 m, vorgegeben wird.

9. Verfahren nach einem der vorangegangenen Ansprüche,
**dadurch gekennzeichnet,**
**dass** die Flugrouten (4) eine Länge kleiner 100 km, bevorzugt kleiner 50 km, insbesondere kleiner 25 km, aufweisen.

10. Transportsystem (1) zur Passagierbeförderung, bevorzugt zum Betrieb gemäß einem der vorangegangenen Ansprüche, aufweisend:
- eine Mehrzahl von senkrecht startenden und senkrecht landenden Fluggeräten (2a, 2b) für Passagiere;
- eine Mehrzahl von Abfertigungseinrichtungen (3a, 3b) für den Start und die Landung von Fluggeräten (2a, 2b), wobei jede Abfertigungseinrichtung Parkplätze für eine Mehrzahl von Fluggeräten (2a, 2b) aufweist,
- ein Steuerungssystem zum automatisierten Start und der automatisierten Landung der Fluggeräte (2a, 2b) an den Abfertigungseinrichtungen (3a, 3b) und zum automatisierten Steuern der Fluggeräte (2a, 2b) entlang vorgegebener Flugrouten (4) zwischen den Abfertigungseinrichtungen (3a, 3b),
welches Steuerungssystem für einen kontinuierlichen Flugverkehr der Fluggeräte (2a, 2b) auf den Flugrouten (4) ausgebildet ist,
**dadurch gekennzeichnet, dass** zumindest eine Teilmenge der Fluggeräte (2a, 2b), bevorzugt alle Fluggeräte (2a, 2b), Sensoren zum Erfassen von Umgebungsbedingungen aufweisen, zumindest einen oder mehrere der Sensoren:
- Brand- und/oder Rauchdetektor;
- Winddetektor;
- Niederschlagsdetektor;
dass die Sensordaten der Fluggeräte (2a, 2b) an ein Flugüberwachungssystem des Transportsystems (1) weitergeleitet werden, wobei das Flugüberwachungssystem ausgebildet ist, automatisiert eine Auswertung der Sensordaten durchzuführen hinsichtlich des Vorliegens einer Gefahrensituation und bei Vorliegen einer Gefahrensituation den Flugbetrieb im Normalmodus zu beenden, einen Notfall-Modus auszulösen und die Fluggeräte (2a, 2b) automatisiert zu landen,
dass in einem Normalmodus zumindest eine Teilmenge der Abfertigungseinrichtungen (3a, 3b), bevorzugt alle Abfertigungseinrichtungen (3a, 3b), jeweils und ständig zumindest eine Notfall-Parkkapazität an freien Parkplätzen aufweisen, welche zumindest einer der folgenden Bedingungen entspricht:
a) zwei mit einer Flugroute (4) verbundene Abfertigungseinrichtungen (3a, 3b) weisen eine gemeinsame Notfall-Kapazität an freien Parkplätzen auf, welche zumindest der Anzahl der sich auf der Flugroute (4) zwischen den beiden Abfertigungseinrichtungen (3a, 3b) fliegenden Fluggeräten (2a, 2b) entspricht, bevorzugt ist vorgenannte Bedingung für jedes Paar von mit einer Flugroute (4) verbundenen Abfertigungseinrichtungen (3a, 3b) erfüllt;
b) die Notfall-Parkkapazität einer Abfertigungseinrichtung entspricht der Anzahl aller auf einer Flugroute (4) dieser Abfertigungseinrichtung gleichzeitig auf diese Abfertigungseinrichtung zufliegenden Fluggeräten (2a, 2b);
c) die Notfall-Parkkapazität entspricht der Summe aus der Hälfte der Anzahl aller auf einer Flugroute (4) dieser Abfertigungseinrichtung gleichzeitig auf diese Abfertigungseinrichtung zufliegenden und der Hälfte der Anzahl aller auf einer Flugroute (4) dieser Abfertigungseinrichtung gleichzeitig von dieser Abfertigungseinrichtung wegfliegenden Fluggeräten (2a, 2b);
und dass das Transportsystem (1) dazu ausgebildet ist, in dem Notfall-Modus für zumindest eine Teilmenge der Flugrouten (4), bevorzugt für alle Flugrouten (4), Startvorgänge von Fluggeräten (2a, 2b) an den mit diesen Flugrouten (4) verbundenen Abfertigungseinrichtungen (3a, 3b) zu stoppen und die auf diesen Flugrouten (4) fliegenden Fluggeräte (2a, 2b) auf einer der mit dieser Flugroute (4) verbundenen Abfertigungseinrichtung zu landen und vorzugsweise automatisiert auf einen freien Parkplatz dieser Abfertigungseinrichtung zu fördern, wobei Transportsystem (1) weiterhin dazu ausgebildet ist, die auf von dem Notfall-Modus betroffenen Flugrouten (4) fliegenden Fluggeräte (2a, 2b) entweder an der vorgesehenen Abfertigungseinrichtung in Flugrichtung zu landen, insbesondere bei Vorsehen einer Notfall-Parkkapazität gemäß Bedingung b), oder an der näherliegenden Abfertigungsstation dieser Flugroute (4) zu landen, insbesondere bei Vorsehen einer Notfall-Parkkapazität gemäß Bedingung c

11. Transportsystem (1) gemäß Anspruch 10,
**dadurch gekennzeichnet,**
**dass** zumindest eine Teilmenge der Abfertigungseinrichtungen (3a, 3b), bevorzugt alle Abfertigungseinrichtungen (3a, 3b), Start- und Landemöglichkeiten für die Fluggeräte (2a, 2b) in einer Höhe größer 50m, bevorzugt größer 75 m, insbesondere größer 100m, über dem Boden aufweisen, vorzugsweise, dass die Abfertigungseinrichtungen (3a, 3b) in oder bevorzugt auf Hochhäusern angeordnet sind,
wobei insbesondere ein Höhenunterschied zwischen den Start- und Landemöglichkeiten der Abfertigungseinrichtungen (3a, 3b) kleiner 50 m, bevorzugt kleiner 25 m, insbesondere kleiner 10 m ist.

12. Transportsystem (1) nach einem der Ansprüche 10 bis 11,
**dadurch gekennzeichnet,**
**dass** zumindest eine Teilmenge der Abfertigungseinrichtung, bevorzugt alle Abfertigungseinrichtungen (3a, 3b) Warteeinrichtungen zur Wartung, Reparatur und/oder Energieversorgung der Fluggeräte (2a, 2b) aufweisen, insbesondere, dass für die Abfertigungseinrichtung für jede Warteeinrichtung eine Fördereinrichtung zum automatisierten Befördern des Fluggeräts (2a, 2b) zwischen Warteeinrichtung und Start- und/oder Landeplatz aufweist.

## Claims

1. Method for operating a transport system (1) for passenger transport, comprising:
- providing a plurality of vertical take-off and vertical landing aircraft (2a, 2b) for passengers;
- providing a plurality of handling facilities (3a, 3b) for the take-off and landing of aircraft (2a, 2b), wherein each of said handling facility comprises parking locations for a plurality of aircraft (2a, 2b),
- configuring flight routes (4) between the handling facilities (3a, 3b) so that each handling facility is connected to at least one further handling facility via a flight route (4),
by which continuous air traffic of aircraft (2a, 2b) occurs on the flight routes (4) at least in one flight direction, with automated take-off, automated flight along the flight route (4) and automated landing,
**characterised in that**
that environmental conditions are detected by sensors, at least by a fire detector, smoke detector, wind detector and/or precipitation detector, in at least a subset of the aircraft (2a, 2b), preferably in all aircraft (2a, 2b), that in a normal mode at least a subset of the handling facilities (3a, 3b), preferably all handling facilities (3a, 3b), each and permanently comprises at least one emergency parking capacity at free parking locations which corresponds to at least one of the following conditions:
a) two handling facilities (3a, 3b) which are connected to a flight route (4), comprise a common emergency capacity on free parking locations, which corresponds at least to the number of aircraft (2a, 2b) flying on the flight route (4) between the two handling facilities (3a, 3b), preferably the aforementioned condition is fulfilled for each pair of handling facilities (3a, 3b) connected by a flight route (4);
b) the emergency parking capacity of a handling facility corresponds to the number of all aircraft (2a, 2b) simultaneously approaching this handling facility on a flight route (4) of this handling facility;
c) the emergency parking capacity corresponds to the sum of half of the number of all aircraft (2a, 2b) which are flying simultaneously to said handling facility on a flight route (4) of this handling facility and half the number of all aircraft (2a, 2b) simultaneously departing from this handling facility on a flight route (4) of this handling facility;
that environmental conditions, which make an interruption of flight operations and the triggering of an emergency mode necessary, are automatically derived and recognised from the sensor data of the aircraft by a control system of the transport system,
and that in the emergency mode for at least a subset of the flight routes (4), preferably for all flight routes (4), take-off procedures of aircraft (2a, 2b) at the handling facilities (3a, 3b) connected to these flight routes (4) are stopped and the aircraft (2a, 2b) flying on these flight routes (4) land on one of the handling facilities connected to this flight route (4) and are preferably automatically conveyed to a free parking location of this handling facility, wherein the aircraft (2a, 2b) flying on flight routes (4) affected by the emergency mode either land at the intended handling facility in flight direction, in particular, if an emergency parking capacity is provided in accordance with condition b), or land at the nearest handling facility of this flight route (4), in particular, if an emergency parking capacity is provided in accordance with condition c).

2. Method according to claim 1,
**characterised in that**
for each handling facility (3a, 3b) a standard take-off frequency is predefined, with which aircraft (2a, 2b) take off in a normal mode and/or that for each flight route (4) a respective standard distance is specified, which represents the distance of an aircraft (2a, 2b) to a directly preceding aircraft (2a, 2b) on the respective flight route (4) in a normal mode and/or
that at least a subset of the flight routes (4), preferably all flight routes (4), are bidirectional.

3. Method according to one of the preceding claims,
**characterised in that**
at least a subset of the flight routes (4), preferably all flight routes (4), comprise a height difference between the highest and lowest point of the flight route (4) of less than 100 m, preferably less than 50 m, in particular less than 30 m.

4. Method according to one of the preceding claims,
**characterised in that**
at least one on-demand handling facility (5) is provided, which is connected to at least one on-demand flight route (5a) with a handling facility, wherein an aircraft (2a, 2b) flies to the on-demand handling facility (5) on the on-demand flight route (5a) only when required, manually requested by a passenger.

5. Method according to one of the preceding claims,
**characterised in that**
an admission procedure is provided for an external aircraft (6), wherein the external aircraft (6) being integrated into the automated flight on a flight route (4), preferably the flight route (4) closest to the external aircraft (6), in particular that a take-off of an aircraft (2a, 2b) at a handling facility of this flight route (4) is prevented or delayed and that the external aircraft (6) is instead integrated into the flight route (4), and/or
that a destination handling facility of a passenger is gathered and the aircraft (2a, 2b) of this passenger is automatically routed to the destination handling facility, where appropriate, via several flight routes (4) connected in series.

6. Method according to one of the preceding claims,
**characterised in that**
during the stay of an aircraft (2a, 2b) at a handling facility, maintenance and/or a power supply of the aircraft (2a, 2b), in particular, charging or replacement of an accumulator battery of the aircraft (2a, 2b), takes place and/or
that a minimum amount of free parking locations for fleet transfers is provided at a plurality of the handling facilities (3a, 3b), preferably at all handling facilities (3a, 3b).

7. Method according to one of the preceding claims,
**characterised in that**
at least a subset of the flight routes (4), preferably all flight routes (4), connect a handling facility with a neighbouring handling facility, preferably that only neighbouring handling facilities (3a, 3b) are connected via flight routes (4) and/or
that at least a subset of the handling facilities (3a, 3b) is connected to several neighbouring handling facilities (3a, 3b), preferably to all neighbouring handling facilities (3a, 3b), via one respective flight route (4), and/or
that each pair of handling facilities (3a, 3b) is connected to each other at least indirectly via flight routes (4).

8. Method according to one of the preceding claims,
**characterized in that**
in normal mode a start frequency in the range from 1s to 30min, preferably in the range from 1s to 5min, in particular, in the range from 1s to 60s, most preferably of about 30s, is predefined at least for a subset of the handling facilities (3a, 3b), preferably for all handling facilities (3a, 3b), and/or
in normal mode, at least for a subset of the handling facilities (3a, 3b), preferably for all handling facilities (3a, 3b), a distance of an aircraft (2a, 2b) to the preceding aircraft (2a, 2b) in the range of 10m to 2km, preferably 50m to 1km, in particular 100m to 800m, is predefined for the respective flight routes (4).

9. Method according to one of the preceding claims,
**characterized in that**
the flight routes (4) comprise a length of less than 100km, preferably less than 50km, in particular less than 25km.

10. Transport system (1) for passenger transport, preferably for operation according to one of the preceding claims:
- a plurality of vertical take-off and vertical landing aircraft (2a, 2b) for passengers;
- a plurality of handling facilities (3a, 3b) for the take-off and landing of aircraft (2a, 2b), each handling facility having parking locations for a plurality of aircraft (2a, 2b),
- a control system for the automated take-off and landing of the aircraft (2a, 2b) at the handling facilities (3a, 3b) and for the automated control of the aircraft (2a, 2b) along predetermined flight routes (4) between the handling facilities (3a, 3b),
which control system is configured for a continuous air traffic of the aircraft (2a, 2b) on the flight routes (4),
**characterised in that**
at least a subset of the aircraft (2a, 2b), preferably all aircraft (2a, 2b), comprise sensors for detecting ambient conditions, at least one or more of the sensors:
- Fire and/or smoke detector;
- Wind detector;
- Precipitation detector;
that the sensor data of the aircraft (2a, 2b) are forwarded to a flight monitoring system of the transport system (1), wherein the flight monitoring system is configured to automatically perform an assessment of the sensor data with regard to the presence of a hazardous situation and, in the event of a hazardous situation, to terminate flight operation in normal mode, trigger an emergency mode and automatically land the flying aircraft (2a, 2b),
that in a normal mode at least a subset of the handling facilities (3a, 3b), preferably all handling facilities (3a, 3b), each and permanently comprises at least one emergency parking capacity at free parking locations which corresponds to at least one of the following conditions:
a) two handling facilities (3a, 3b) which are connected to one flight route (4) comprise a common emergency capacity of free parking locations, which corresponds at least to the number of aircraft (2a, 2b) flying on the flight route (4) between the two handling facilities (3a, 3b), preferably the aforementioned condition is fulfilled for each pair of handling facilities (3a, 3b) connected by a flight route (4);
b) the emergency parking capacity of a handling facility corresponds to the number of all aircraft (2a, 2b) simultaneously approaching this handling facility on a flight route (4) of this handling facility;
c) the emergency parking capacity corresponds to the sum of half of the number of all aircraft (2a, 2b) which are flying simultaneously to said handling facility on a flight route (4) of this handling facility and half the number of all aircraft (2a, 2b) simultaneously departing from this handling facility on a flight route (4) of this handling facility;
and that in the emergency mode for at least a subset of the flight routes (4), preferably for all flight routes (4), the transport system (1) is configured to stop take-off operations of aircraft (2a, 2b) at the handling facilities (3a, 3b) connected to these flight routes (4) and to land the aircraft (2a, 2b) flying on these flight routes (4) on one of the handling facilities connected to this flight route (4) and preferably to convey them automatically to a free parking location of this handling facility,
wherein the transport system (1) is further designed to land the aircraft (2a, 2b) flying on flight routes (4) affected by the emergency mode either at the intended handling facility in flight direction, in particular, if an emergency parking capacity is provided in accordance with condition b), or to land at the nearer handling facility of this flight route (4), in particular if an emergency parking capacity is provided in accordance with condition c).

11. Transport system (1) according to claim 10,
**characterised in that**
at least a subset of the handling facilities (3a, 3b), preferably all handling facilities (3a, 3b), comprise take-off and landing sites for the aircraft (2a, 2b) at a height greater than 50m, preferably greater than 75m, in particular, greater than 100m, above the ground, preferably that
the handling facilities (3a, 3b) are arranged in or preferably on high-rise buildings,
wherein in particular a height difference between the take-off and landing sites of the handling facilities (3a, 3b) is less than 50m, preferably less than 25m, in particular, less than 10m.

12. Transport system (1) according to one of claims 10 to 11,
**characterised in that**
at least a subset of the handling facilities, preferably all handling facilities (3a, 3b), comprises maintenance facilities for maintenance, repair and/or energy supply for the aircraft (2a, 2b), in particular, that the handling facilities for each maintenance facility comprise a conveying device for automated conveying of the aircraft (2a, 2b) between the maintenance facility and the take-off and/or landing site.

## Revendications

1. Méthode d'exploitation d'un système de transport (1) pour le transport de passagers,
Comprenant:
- Une mise à disposition de plusieurs aéronefs à décollage et atterrissage verticaux (2a, 2b) pour passagers ;
- Une mise à disposition de plusieurs sites d'opération (3a, 3b) pour le décollage et l'atterrissage d'aéronefs (2a, 2b), chacun de ces sites d'opération comprenant des emplacements de stationnement pour plusieurs aéronefs à décollage et atterrissage verticaux (2a, 2b),
- Une préparation des plans de vol (4) entre les sites d'opération (3a, 3b) de sorte que chaque site d'opération soit relié à au moins un autre site d'opération par un plan de vol (4),
dans lequel a lieu un trafic aérien continu d'aéronefs à décollage et atterrissage verticaux (2a, 2b) utilisant ces plans de vol (4) et dont au moins l'un d'entre eux inclus un décollage, un vol et/ou un atterrissage automatisé, qui se **caractérise par** :
au moins un sous-ensemble des aéronefs à décollage et atterrissage verticaux (2a, 2b), de préférence tous, équipés d'une méthode de diagnostic des conditions de vol à l'aide de capteurs permettant au moins la détection d'incendie, de fumée, de vent et/ou de précipitations
dans le cas d'opérations dites en mode normal, au moins un sous-ensemble des sites d'opération (3a, 3b), de préférence tous, comprenant une liste de sites d'atterrissage d'urgence, en permanence libres d'obstacles, répondant à au moins une des conditions suivantes :
a) deux sites d'opération (3a, 3b) reliées par un plan de vol (4) comprennent un nombre de sites d'atterrissage d'urgence commun, équivalant au moins au nombre d'aéronefs à décollage et atterrissage verticaux (2a, 2b) volant sur des plans de vol (4) entre ces deux sites d'opération (3a, 3b) ; de préférence, la condition susmentionnée est remplie pour chaque paire de sites d'opération (3a, 3b) reliées par des plans de vol (4) ;
b) un site d'opération (3a, 3b) comprend au moins autant de sites d'atterrissage d'urgence que le nombre maximum d'aéronefs à décollage et atterrissage verticaux (2a, 2b) pouvant approcher simultanément ce site d'opération (3a, 3b) par des plans de vol (4) ;
c) un site d'opération (3a, 3b) comprend au moins autant de sites d'atterrissage d'urgence que la somme de la moitié du nombre de tous les aéronefs à décollage et atterrissage verticaux (2a, 2b) qui volent simultanément par un plan de vol (4) vers ledit site et de la moitié du nombre de tous les aéronefs à décollage et atterrissage verticaux (2a, 2b) qui partent simultanément par un plan de vol (4) dudit site;
un système de contrôle du système de transport étant capable de déduire automatiquement, à partir des données de diagnostic des conditions de vol des aéronefs à décollage et atterrissage verticaux (2a, 2b), de la nécessité d'une interruption des opérations de vol et le déclenchement d'un mode d'urgence ,
et, dans le cas d'opérations dites en mode d'urgence, pour au moins un sous-ensemble des plans de vol (4), de préférence pour tous les plans de vol (4), les procédures de décollage des aéronefs à décollage et atterrissage verticaux (2a, 2b) dans les sites d'opération (3a, 3b) reliées à ces plans de vol (4) étant arrêtées et les aéronefs à décollage et atterrissage verticaux (2a, 2b) en train d'exécuter l'un de ces plans de vol (4) atterrissant sur l'un des sites d'opération (3a, 3b) prévu par leur plan de vol (4) et étant, de préférence, automatiquement acheminés vers un emplacement de stationnement libre de ce site d'opération, et ceux des aéronefs à décollage et
atterrissage verticaux (2a, 2b) en train d'exécuter l'un de ces plans de vol (4) concernées par le mode d'urgence atterrissant soit sur le site d'opération prévue dans la direction du vol, en particulier si une capacité de stationnement d'urgence y est prévue conformément à la condition b), soit sur le site d'opération de ce plan de vol (4) qui est le plus proche, en particulier si une capacité de stationnement d'urgence y est prévue conformément à la condition c).

2. Procédé selon la revendication 1,
présente :
pour chaque site d'opération (3a, 3b), une fréquence de décollage standard avec laquelle les aéronefs à décollage et atterrissage verticaux (2a, 2b) décollent en mode normal et/ou que pour chaque plan de vol (4), une distance de séparation standard en mode normal représentant la distance d'un aéronef à décollage et atterrissage vertical (2a, 2b) par rapport à celui qui le précède immédiatement sur un même plan de vol (4) et/ou
qu'au moins un sous-ensemble des plans de vol (4), de préférence tous les plans de vol (4), soient bidirectionnels.

3. Procédé selon l'une des revendications précédentes,
présente :
au moins un sous-ensemble des plans de vol (4), de préférence tous les plans de vol (4), présentent une différence de hauteur entre le point le plus haut et le point le plus bas du plan de vol (4) inférieure à 100 m, de préférence inférieure à 50 m, de plus grande préférence inférieure à 30 m.

4. Procédé selon l'une des revendications précédentes,
présente :
la mise à disposition d'au moins un site d'opération à la demande (5), desservi par au moins un plan de vol à la demande (5a) avec un site d'opération, en cas de demande manuelle d'un passager de voler dans un aéronef à décollage et atterrissage vertical (2a, 2b) vers le site d'opération à la demande (5) selon le plan de vol à la demande (5a).

5. Procédé selon l'une des revendications précédentes,
présente :
une procédure d'admission pour aéronefs externes (6), intégrant automatiquement un aéronef externe (6) à un plan de vol (4), de préférence au plan de vol (4) le plus proche dudit aéronef externe (6) et empêchant ou retardant le décollage des aéronefs à décollage et atterrissage verticaux (2a, 2b) localisés sur l'un des sites d'opération du plan de vol (4) où ledit aéronef externe (6) est intégré à leur place sur ledit plan de vol (4), et/ou
le site d'opération de destination d'un passager est sauvegardé de sorte que son aéronef à décollage et atterrissage vertical (2a, 2b) soit automatiquement acheminé vers cette destination, le cas échéant par le biais de plusieurs itinéraires de vol (4) connectés en série.

6. Procédé selon l'une des revendications précédentes,
présente :
lors du séjour d'un aéronef à décollage et atterrissage vertical (2a, 2b) dans un site d'opération, l'entretien et/ou l'alimentation électrique de l'aéronef à décollage et atterrissage vertical (2a, 2b), entre autres, le chargement ou le remplacement d'une batterie électrique de l'aéronef à décollage et atterrissage vertical (2a, 2b), et/ou
un nombre minimum d'emplacements de stationnement gratuits pour les transferts de passagers dans au moins un sous-ensemble de sites d'opération (3a, 3b), de préférence dans tous les sites d'opération (3a, 3b).

7. Procédé selon l'une des revendications précédentes,
présente :
au moins un sous-ensemble des plans de vol (4), de préférence tous les plans de vol (4), reliant un site d'opération à un site d'opération voisin, de préférence seuls les sites d'opération (3a, 3b) voisins étant reliés par des plan de vol (4) et/ou
au moins un sous-ensemble des sites d'opération (3a, 3b) reliant plusieurs sites d'opération voisins (3a, 3b), de préférence tous les sites d'opération voisins (3a, 3b), par autant de plans de vol (4), et/ou
chaque paire de sites d'opération (3a, 3b) étant reliés l'un à l'autre au moins indirectement par une série plans de vol (4).

8. Procédé selon l'une des revendications précédentes,
présente :
en mode normal, une fréquence de démarrage comprise entre 1s et 30min, de préférence entre 1s et 5min, plus grande préférence entre 1s et 60s, plus grande préférence encore d'environ 30s, prédéfinie au moins pour un sous-ensemble de sites d'opération (3a, 3b), de préférence pour tous les sites d'opération (3a, 3b), et/ou
en mode normal, au moins pour un sous-ensemble de sites d'opération (3a, 3b), de préférence pour tous les sites d'opération (3a, 3b), une distance entre un aéronef à décollage et atterrissage vertical (2a, 2b) et l'aéronef à décollage et atterrissage vertical (2a, 2b) qui le précède comprise entre 10 m et 2 km, de préférence entre 50 m et 1 km, plus grande préférence entre 100 m et 800 m, prédéfinie pour chaque plan de vol (4).

9. Procédé selon l'une des revendications précédentes,
présente :
des plans de vol (4) d'une longueur inférieure à 100 km, de préférence inférieure à 50 km, plus grande préférence inférieure à 25 km.

10. Méthode d'exploitation d'un système de transport (1) pour le transport de passagers déterminé selon l'une des revendications précédentes, préférablement toutes, présente :
- plusieurs aéronefs à décollage et atterrissage verticaux (2a, 2b) pour le transport de passagers ;
- plusieurs sites d'opération (3a, 3b) pour aéronefs à décollage et atterrissage verticaux (2a, 2b), chaque site d'opération disposant d'emplacements de stationnement pour plusieurs aéronefs à décollage et atterrissage verticaux (2a, 2b),
- un système de gestion automatique de décollage et d'atterrissage d'aéronefs à décollage et atterrissage verticaux (2a, 2b) dans des sites d'opération (3a, 3b) et pour la gestion automatique des plans de vol (4) des aéronefs à décollage et atterrissage verticaux (2a, 2b) entre les sites d'opération (3a, 3b),
ce système de contrôle est configuré pour un trafic aérien continu des aéronefs à décollage et atterrissage verticaux (2a, 2b) le long de leurs plans de vol (4),
présente :
au moins un sous-ensemble des aéronefs à décollage et atterrissage verticaux (2a, 2b), de préférence tous les aéronefs à décollage et atterrissage verticaux (2a, 2b), comprenant une méthode de diagnostic des conditions de vol à l'aide d'au moins l'un des capteurs suivants:
- Détecteur d'incendie et/ou de fumée ;
- Détecteur de vent ;
- Détecteur de précipitations ;
les données des capteurs des aéronefs à décollage et atterrissage verticaux (2a, 2b) sont transmises à un système de surveillance des vols du système de transport (1), ledit système de surveillance des vols est configuré pour effectuer automatiquement une évaluation des données des capteurs en ce qui concerne la présence d'une situation dangereuse et, si une situation dangereuse est présente, pour mettre fin aux opérations de vol en mode normal, déclencher un mode d'urgence et requérir automatiquement l'atterrissage des aéronefs à décollage et atterrissage verticaux (2a, 2b) en vol, en mode normal, au moins un sous-ensemble des sites d'opération (3a, 3b), de préférence tous les sites d'opération (3a, 3b), comprenant chacun et en permanence au moins une capacité de stationnement d'urgence à des emplacements de stationnement libres correspondant à au moins l'une des conditions suivantes :
a) deux sites d'opération (3a, 3b) reliées par un plan de vol (4) comprennent un nombre de sites d'atterrissage d'urgence commun, qui correspond au moins au nombre d'aéronefs à décollage et atterrissage verticaux (2a, 2b) volant sur des plans de vol (4) entre ces deux sites d'opération (3a, 3b) ; de préférence, la condition susmentionnée est remplie pour chaque paire de sites d'opération (3a, 3b) reliées par des plans de vol (4) ;
b) la capacité de stationnement d'urgence comprend au moins autant de sites d'atterrissage d'urgence que le nombre maximum d'aéronefs à décollage et atterrissage verticaux (2a, 2b) pouvant approcher simultanément ce site d'opération (3a, 3b) par un plan de vol (4) ;
c) la capacité de stationnement d'urgence comprend au moins autant de sites d'atterrissage d'urgence que la somme de la moitié du nombre de tous les aéronefs à décollage et atterrissage verticaux (2a, 2b) qui volent simultanément par un plan de vol (4) vers ledit site et de la moitié du nombre de tous les aéronefs à décollage et atterrissage verticaux (2a, 2b) qui partent simultanément par un plan de vol (4) dudit site;
et que le système de transport (1) est configuré, en mode d'urgence et pour au moins un sous-ensemble des plans de vol (4), de préférence pour tous les plans de vol (4), pour arrêter les opérations de décollage des aéronefs à décollage et atterrissage verticaux (2a, 2b) dans les sites d'opération (3a, 3b) reliées à ces plans de vol (4) et pour faire atterrir les aéronefs à décollage et atterrissage verticaux (2a, 2b) volant sur ces plans de vol (4) dans l'un des sites d'opération reliées à ce plan de vol (4) et, de préférence, pour les acheminer automatiquement vers un emplacement de stationnement libre de ce site d'opération,
dans lequel le système de transport (1) est en outre conçu pour faire atterrir les aéronefs à décollage et atterrissage verticaux (2a, 2b) volant sur les routes de vol (4) affectées par le mode d'urgence soit sur un site d'opération prévu dans la direction du vol, en particulier si une capacité de stationnement d'urgence y est fournie conformément à la condition b), soit au site d'opération le plus proche de ce plan de vol (4), en particulier si une capacité de stationnement d'urgence est fournie conformément à la condition c).

11. Système de transport (1) selon la revendication 10,
présente :
au moins un sous-ensemble des sites d'opération (3a, 3b), de préférence toutes les sites d'opération (3a, 3b), comprenant un site de décollage et d'atterrissage pour les aéronefs à décollage et atterrissage verticaux (2a, 2b) à une hauteur supérieure à 50 m, de préférence supérieure à 75 m, plus grande préférence supérieure à 100 m, au-dessus du sol, de préférence les sites d'opération (3a, 3b) eux-mêmes, et disposées dans ou, de préférence, sur des immeubles de grande hauteur,
en particulier, une différence de hauteur entre les sites de décollage et d'atterrissage d'un site d'opération (3a, 3b) est inférieure à 50 m, de préférence inférieure à 25 m, plus grande préférence inférieure à 10 m.

12. Système de transport (1) selon les revendications 10 à 11,
présente :
au moins un sous-ensemble des sites d'opération, de préférence toutes les sites d'opération (3a, 3b), comprenant des installations de maintenance pour l'entretien, la réparation et/ou l'approvisionnement en énergie des aéronefs à décollage et atterrissage verticaux (2a, 2b), en particulier que les installations de manutention pour chaque installation de maintenance comprennent un dispositif de transport pour le transport automatisé de l'aéronef (2a, 2b) entre l'installation de maintenance et le site de décollage et/ou d'atterrissage.
